# EUROPEAN PATENT SPECIFICATION

(11) **EP 1 347 397 B1**
(45) Date of publication and mention of the grant of the patent: **22.09.2010**
(21) Application number: 03251628.8
(22) Date of filing: 18.03.2003
(51) Int. Cl.: G06F 17/30

(54) **Web-based management of collections of image data**
Internet basierte Verwaltung von Bildersammlungen
Gestion par internet de collections d'images

(30) Priority: 19.03.2002 JP 2002077074
(43) Date of publication of application: 24.09.2003
(73) Proprietor: CANON KABUSHIKI KAISHA, Tokyo (JP)
(72) Inventor: Yamaguchi, Kotaro, c/o Canon Kabushiki Kaisha, Ohta-ku, Tokyo (JP); Maeda, Kenji, c/o Canon Kabushiki Kaisha, Ohta-ku, Tokyo (JP); Kobayashi, Makoto, c/o Canon Kabushiki Kaisha, Ohta-ku, Tokyo (JP); Sunata, Jin, c/o Canon Kabushiki Kaisha, Ohta-ku, Tokyo (JP)
(74) Representative: Hitching, Peter Matthew

(56) References cited:
- EP-A- 0 852 440
- WO-A-01/22299
- WO-A-01/86511
- US-A- 6 085 249
- US-A- 6 148 333

## Description

### FIELD OF THE INVENTION

The present invention relates to an information processing system, information processing apparatus, and information processing method, which provide services that receive, store, and publish contents, e.g. images, via a network, and a program for making a computer implementation of that method.

### BACKGROUND OF THE INVENTION

Along with the development of communication infrastructures and progress of information communication technologies, information services using a network such as the Internet and the like are available.

As one of such information services, a site (to be referred to as a photo site hereinafter) which receives and keeps user's image data via the internet, and publishes the image data at a desired timing of the user (to be also referred to as an album owner hereinafter) to the user or a partner designated by that user is known.

In some cases, the album owner may delete the image data, may change the property of the image data to be nonpublic, or may delete his or her user registration while another user is browsing images.

Conventionally, cached old images are published to such user. However, in the above case, the album owner's will is not reflected and this poses a problem.

United States Patent Specification No. US-A-6,148,333 discloses a system for monitoring activity of an image server which stores a multiplicity of images. The system monitors which of the images stored on the image server is accessed, and provides an output indication of the number of times that each image portion of the multiplicity of images stored in the image server is accessed.

European Patent Specification No. EP-A-0852440 discloses a data transmission system which provides means for indicating the validity of the provenance of data transmitted across a computer network.

United States Patent Specification No. US-A-2002/9926511 discloses a system and method for controlling access to stored content. A set of access labels are assigned ot each of a number of networked users and are used in specifying access control lists of content in respect of the users.

### SUMMARY OF THE INVENTION

The present invention has been proposed to solve the aforementioned problem, and has as a concern to provide an information processing system, information processing apparatus, and information processing method, which can provide services in correspondence with changing circumstances such as a change in content property, deletion of a content, deletion of user registration of a content owner, and the like upon providing content browsing services, and a program for making a computer implement that method. The content can include an image.

A first aspect of the present invention provides an information processing apparatus as set out in claim 1. A second aspect of the present invention provides a method of providing stored contents data as set out in claim 5. A third aspect of the present invention provides a storage medium as set out in claim 9.

Other features and advantages of the present invention will be apparent from the following description taken in conjunction with the accompanying drawings, in which like reference character designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a schematic diagram showing the arrangement of the overall information service system according to the present invention;
Fig. 2 is a block diagram showing an example of the arrangement of a photo site according to the present invention;
Fig. 3 is a block diagram showing an example of the hardware arrangement of the photo site of the present invention;
Fig. 4 shows a table used to manage customer information at the photo site of the present invention;
Fig. 5 shows a table used to manage customer state information at the photo site of the present invention;
Fig. 6 shows a table used to manage a customer's album at the photo site of the present invention;
Fig. 7 shows a table used to manage a customer's album at the photo site of the present invention;
Fig. 8 shows a table used to manage an image contained in a customer's album at the photo site of the present invention;
Fig. 9 shows a table used to manage a customer's image at the photo site of the present invention;
Fig. 10 is a flow chart showing the processing sequence executed when a PC accesses the photo site of the present invention;
Fig. 11 shows an example of a dialog displayed on various user terminals when the photo site of the present invention starts a service;
Fig. 12 shows an example of a dialog displayed on various user terminals when the photo site of the present invention provides a service;
Fig. 13 is a flow chart showing an example of a process executed when the photo site of the present invention provides an album edit service to the user;
Fig. 14 is a flow chart showing an example of the sequence of an album edit process at the photo site of the present invention;
Fig. 15 shows an example of an album property setup dialog at the photo site of the present invention;
Fig. 16 shows an example of an album deletion confirmation dialog at the photo site of the present invention;
Fig. 17 shows an example of a protocol when a user PC of the present invention issues a new album registration instruction, property instruction, and delete instruction to the photo site;
Fig. 18 shows an example of an e-mail notification setup dialog of an album at the photo site of the present invention;
Fig. 19 shows an example of an album notification mail message of the present invention;
Fig. 20 is a flow chart showing album selection & display processes executed upon depression of one of album select buttons at the photo site of the present invention;
Fig. 21 shows an example of an album detail display dialog at the photo site of the present invention;
Fig. 22 shows an example of a protocol when the user PC or a mobile terminal of the present invention issues an album browse instruction to the photo site;
Fig. 23 shows an example of an album browse start dialog of the present invention;
Fig. 24 shows an album browse dialog of the present invention;
Fig. 25 shows an example of a login dialog displayed when a mobile terminal of the present invention browses an album;
Fig. 26 shows an example of the first dialog displayed when the mobile terminal of the present invention browses an album;
Fig. 27 shows an example of a detail page associated with detailed information such as an image name, comment, and the like, which is displayed when the mobile terminal of the present invention browses an album;
Fig. 28 shows an example of a page indicating that an image has been deleted, which is displayed when the mobile terminal of the present invention browses an album;
Fig. 29 shows an example of a table used to manage access from the mobile terminal;
Fig. 30 shows an example of a table used to store album information to be browsed by the mobile terminal;
Fig. 31 shows an example of a table used to store image information contained in an album to be browsed by the mobile terminal;
Fig. 32 is a flow chart showing an example of a process for displaying various dialogs;
Fig. 33 is a flow chart showing an example of a process for displaying various dialogs; and
Fig. 34 is a flow chart showing an example of a process for displaying various dialogs.

### DESCRIPTION OF THE PREFERRED EMBODIMENTS

Preferred embodiments of the present invention will be exemplified in detail hereinafter with reference to the accompanying drawings. Note that the relative layout of building components, display dialogs, and the like described in the embodiments do not limit the scope of the present invention to only them unless otherwise specified, and their modifications, and examples including/excluding them are also included in the present invention.

As an embodiment of the present invention, an information service system which shares and provides digital image data via the Internet will be exemplified.

### <Outline of Information Service System of This Embodiment>

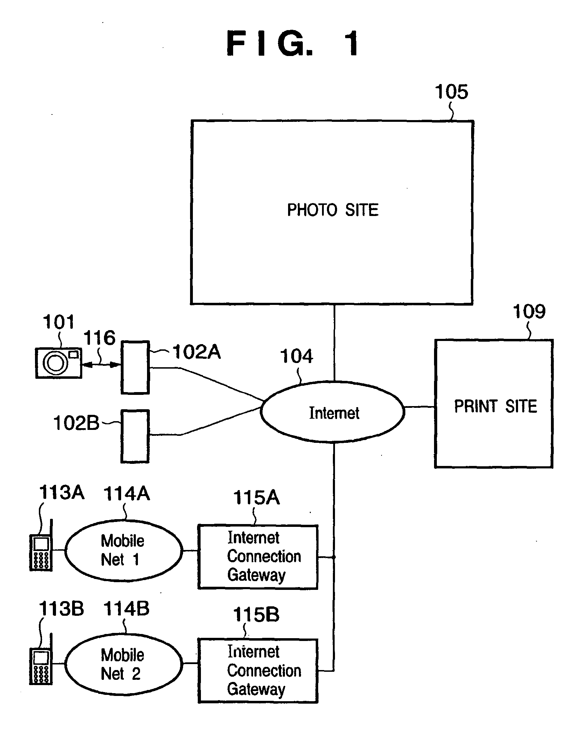

Fig. 1 shows an example of the arrangement of an information service system according to this embodiment.

An information service system includes personal computers (PCs) 102 of users who receive a service, mobile terminals 113, a photo site 105 that manages users' images and personal information, and a print site 109 that executes print processes of images managed at the photo site 105.

The photo site 105 provides a service which keeps image data sensed by the user using an image input device 101 in a storage area of a server on the Internet 104, and publishes the image data at a desired of the user (to be also referred to as an album owner hereinafter) to the user or a partner designated by that user. The photo site 105 according to this embodiment does not provide any print services by itself, and sends print order requests to the print site 109 that can provide various print services in cooperation with the print site 109. The print site 109 prints out digital documents such as new year greeting cards, wordprocessor documents, images, and the like, which are transferred using the Internet 104, and provides printouts as commodities to the user and the like.

Each user accesses the photo site 105 using a Web browser, which runs on the user PC 102, and sends a browse request of images saved at the photo site 105. The photo site 105 allows to display images on the Web browser which runs on the user PC under a given condition. The user can select an image that he or she wants to print out from those browsed on the Web browser. Identification information of the selected image is passed from the photo site 105 to the print site 109.

### (Image Upload)

Referring to Fig. 1, reference numeral 101 denotes an image input device which converts an optical image as image information into an electrical signal, executes a predetermined image process, and then records/plays back the image as digital information. The image input device can be either a digital still camera that can sense a still image and can record it as image data, or a digital video camera that can capture a moving image, and can record it as moving image data.

A data transfer interface 116 is used to transfer sensed image data between the image input device 101 and user PC 102. The data transfer interface 116 may adopt either a wired interface represented by Universal Serial Bus (USB) and IEEE1394, or a wireless interface represented by Infrared Data Association (IrDA) and Bluetooth.

Image data which is sensed by the image input device 101 and is stored as digital information is transferred to a storage area of an information storage device such as a Hard Disk Drive (HDD) of the user PC 102 via this data transfer interface 116. As for image data transfer from the image input device 101 to the user PC 102, image data stored in the information storage device in the image input device 101 are simultaneously transferred in response to a command from an Operating System (OS) or dedicated software installed in a user PC 102A, or the OS or dedicated software which runs on the user PC 102 assures a data recording area on an information recording unit of the user PC 102 and transfers image data to that area.

On the user PC 102, a Web browser having a standard protocol capable of information transfer on the Internet 104 can run. With this Web browser, the user accesses the photo site 105 using a standard protocol such as a Hyper Text Transfer Protocol (http protocol) or the like, and display Web information, which is created using a description language such as a Hyper Text Markup Language (HTML), eXtensible Markup Language (XML), or the like. This Web information links to with multimedia information such as image data, audio data, and the like managed at the photo site 105. With this operation, the user of the user PC 102 can receive services provided by the photo site 105 via the Internet 104.

Image data, which is sensed by the image input device 101 and stored in the information storage area of the user PC 102, is transferred to the photo site 105 in response to a user's request from the user PC 102 (this transfer will be referred to as image upload hereinafter). The image upload method includes a method in which image data to be transferred is selected from the aforementioned Web browser and is transferred in synchronism with an image upload request action, and a method in which image data is selected using image upload dedicated software or the like, and is directly transferred. Both these methods are implemented based on a protocol such as http, File Transfer Protocol (ftp), or the like, which can be used on the Internet.

It is then checked if the uploaded image data is data that the photo site server 105 can use. If it is determined that the photo site 105 can use the uploaded data, the uploaded image data, property information, and the like are stored. The photo site 105 can manage a plurality of uploaded image data as an album as a management unit of such data.

In this stage, the photo site 105 notifies the user PC 102 that image data has been successfully uploaded.

The user of the user PC 102 can upload image data in this way via the Web browser.

The photo site 105 simultaneously manages various data in addition to the property information of image data. For example, the photo site 105 manages data of user property information registered in advance, print site property information to which a printout request of the uploaded image data is to be sent, and the like.

Note that the PC has been exemplified as a terminal that uploads an image. However, the information service system according to the present invention is not limited to such specific terminal, and images may be uploaded from the mobile terminal 113 (e.g., a mobile phone), or may be directly uploaded from an image input device such as a digital still camera, digital video camera, scanner, copying machine, or the like via wired or wireless communications.

### (Image Browse Service)

A method that allows a user other than the user who uploaded image data to the photo site 105 to browse image data will be explained below.

The photo site 105 provides a browse service of an uploaded image or an album that manages a plurality of uploaded images as one archive to a third party designated by the upload user. The user who uploaded image data to the photo site 105 notifies the photo site 105 of an e-mail address of a user to whom the upload user grants a permission to browse (to be referred to as a browse user hereinafter) via the Web browser.

Upon publishing images to the browse user, the photo site 105 generates a Universal Resource Locator (URL) required to publish them. At this time, a unique address which uses a random number or the like that cannot be uniquely estimated is assigned to the URL to be generated (such URL that cannot be uniquely estimated will be referred to as a random URL hereinafter). An example of such URL is:
http://_.com/PhotoSite/Album
/AlbumEntry.cgi?AlbumID=AJNWDMF

The photo site server 105 sends the random URL generated in this way to the browse user as an e-mail message via the Internet 104 while appending password information required to browse if necessary. Upon reception of the e-mail message, the browse user can browse images or albums designated by the user who uploaded images by accessing the Internet 104 from, e.g., a user PC 102B, and inputting the random URL described in the e-mail message to the Web browser.

Also, the photo site server 105 can provide browse notification and browse function services of images (or albums) to the owner of a mobile terminal designated by the user who uploaded images. In this case, the photo site 105 sends an e-mail message to the mobile terminal 113 as in the e-mail message sent to the browse user. Upon receiving the e-mail message, a user (a user who accesses the photo site 105 using the mobile terminal 113 will be referred to as a mobile terminal user hereinafter) can similarly browse images and albums.

The e-mail message addressed to the mobile terminal user is sent from a mail server in the photo site 105 to a mobile network 114A that can exchange various data with a mobile terminal 113A via the Internet 104 and an Internet connection gateway 115A, and is then transferred to the mobile terminal 113A. Upon reception of the e-mail message, the mobile terminal user accesses the photo site server 105 via a route of mobile network 114A - Internet connection gateway 115A - Internet 104 by inputting the random URL address described in the e-mail message at a Web browser dedicated to the mobile terminal 113A.

The photo site 105 returns Web data created using a description language such as HTML, XML, or the like, which can be displayed on a Web browser that runs on the PC 102, in response to access from the browse user.

On the other hand, the photo site 105 returns Web data created using a description language such as Wireless Markup Language (WML), CompactHTML, or the like, which can be displayed on a Web browser that runs on the mobile terminal 113A, in response to access from the mobile terminal user. In this case, the photo site server 105 discriminates the model of the mobile terminal 113A that the mobile terminal user uses, and outputs Web data created using a description language compatible to that model. The model which can browse is not only the mobile terminal 113A but also a mobile terminal 113B which uses a different communication protocol specification, information description language, and mobile network environment. Hence, the photo site 105 generates and outputs Web data created using description languages compatible to various mobile terminals. For the sake of simplicity, Fig. 1 shows only two mobile terminal models A and B that can be used. However, in practice, three or more mobile terminal models can be used.

### <Example of Arrangement of Photo Site of This Embodiment>

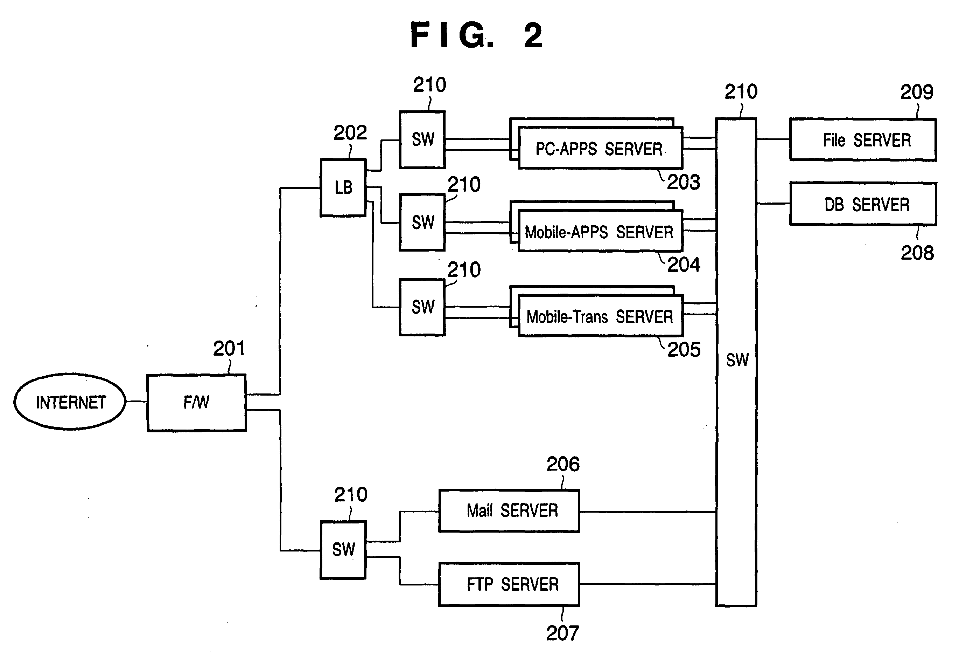

Fig. 2 shows an example of the arrangement of the photo site 105 of this embodiment.

The photo site 105 mainly comprises a firewall (F/W) 201, load balancer (LB) 202, application servers 203 and 204, contents conversion server 205, mail server 206, FTP server 207, database (DB) server 208, file server 209, and Ethernet switch (SW) 210.

In the photo site 105, the firewall 201 has a function of, e.g., blocking external invasions and attacks. The firewall 201 is used to securely manage the servers on the intranet in the photo site 105.

The photo site 105 includes the application server (PC-APPS) 203 which provides services mainly to the PCs 102, and the application server (Mobile-APPS) 204 which provides services to the mobile terminals 113. These application servers serve as WWW servers. The application servers 203 and 204 acquire image information and user information, and generate pages in collaboration with the DC server 208 as needed.

The load balancer 202 is a load distribution device, and has a load distribution function that distributes accesses to the photo site 105 to a plurality of servers in the intranet. Also, the load balancer 202 has a function of acquiring terminal information of an access source, and discriminating if a browse request comes from the mobile terminal 103 or PC 102. Based on this discrimination result, the load balancer 202 distributes a browse request from the PC 102 to the application server 203, and that from the mobile terminal 113 to the contents conversion server (Mobile-Trans) 205.

The application server 203 has a home page of a net image save service corresponding to access from the PC 102. Also, the application server 203 provides user home pages for respective users, and allows these users to use an image keep service including image browse, password setup, browse notification mail services, and the like.

The contents conversion server 205 serves as a proxy server which relays access from the mobile terminal 113 to the mobile terminal application server 204. Upon receiving a request from the mobile terminal 113, the contents conversion server 205 relays the received request to the mobile terminal application server 204.

The application server 204 communicates with backends (the DB server 208 and file server 209 that save information such as the IDs, image information, passwords required upon publishing browse images, and the like of respective users), dynamically generates mobile terminal display dialog data in accordance with a request, and returns that data to the contents conversion server 205. The application server 204 provides an image browse service corresponding to access from the mobile terminal 113, and generates pages for respective users.

The contents conversion server 205 makes contents conversion of the received mobile terminal display dialog data in correspondence with the mobile terminal 113 as a request source, and sends back the converted data to the mobile terminal 113. The contents conversion server 205 has tables corresponding to respective mobile terminals, and associates model information of mobile terminals with image information, markup languages, and the like to be converted. The contents conversion server 205 performs data conversion including image formation conversion for each mobile terminal 113 corresponding to another markup language in response to a request. More specifically, upon receiving a request from the mobile terminal 113 by HTTP, the contents conversion server 205 acquires model information as User-Agent information contained in the request, and makes data conversion with reference to information set in a table.

The mail server 206 sends a user registration confirmation mail message, image data browse notification mail message, and the like in accordance with instructions from the application server 203.

The FTP server 207 receives images uploaded by the user using an ftp protocol. Image data received once are saved in the file server 209 which serves as a main storage.

The aforementioned photo site 105 according to this embodiment has the following functions:
(1) User registration: This function allows the user to make user registration as a user who receives services of the photo site 105 using the user PC 102A. The photo site server 105 issues a user ID to the registered user.
(2) Image upload: This function allows transfer of images from the user PC 102A to the photo site 105.
(3) Print order: This function allows the user to issue an image print instruction from the user PC 102A to the photo site 105, and prints images via the print site 109.
(4) Notification of browse permission: This function sends an e-mail message that grants permission to browse image data stored at the photo site 105 from the user PC 102A to the user PC 102B and mobile terminal 113A.
(5) Browse of image data: This function allows the user PC 102 to browse image data stored at the photo site 105.
(6) Browse of image data from mobile terminal 113: This function allows the mobile terminal 113A to browse image data stored at the photo site 105.

### <Example of Hardware Arrangement of Photo Site of This Embodiment>

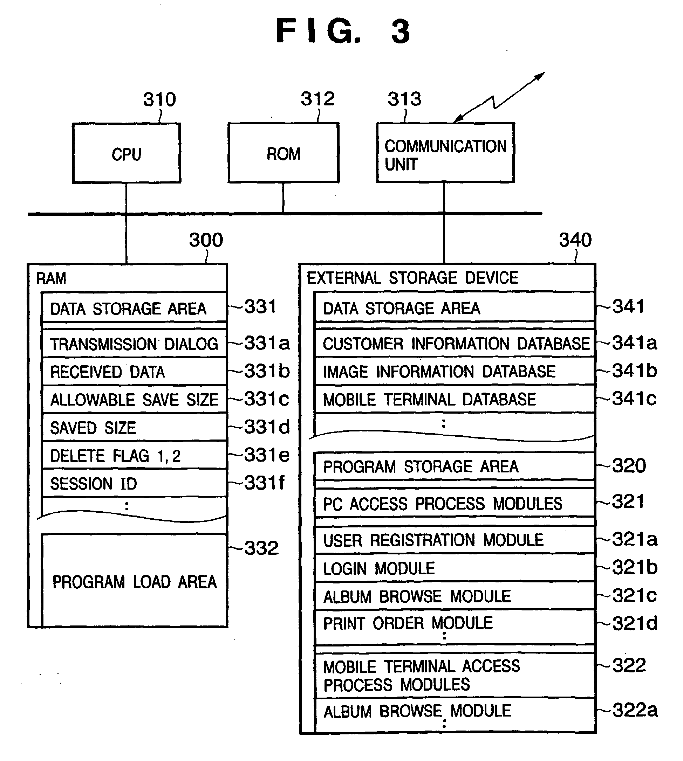

Fig. 3 shows an example of the hardware arrangement of the photo site 105 of this embodiment. Note that Fig. 3 shows the arrangement with focus on a control unit, but input/output devices and the like are omitted.

Reference numeral 310 denotes a Central Processing Unit (CPU) as a control device of Fig. 1, which controls the entire photo site 105. A Read Only Memory (ROM) 312 stores programs and parameters which need not be changed. A Random Access Memory (RAM) 300 provides storage areas for temporarily storing programs and data, and includes a data storage area 331 and program load area 332.

System programs such as an OS, printer driver, and the like, or application programs provided by the user or the like are loaded onto the program load area 332. The loaded programs are executed by the CPU 310.

On the data storage area 331, a transmission dialog 331a to be provided to a user's communication terminal, received data 331b received from the user's communication terminal, an allowable save size 331c and currently saved size 331d, which are used to check if data can be saved, an area 331e that stores delete flags 1 and 2 used upon browsing from the mobile terminal 113, a session ID 331f, and the like are assured as areas used in this embodiment.

An external storage device 340 includes a fixed hard disk or memory card, or a detachable, mobile medium such as a floppy disk, an optical disk such as a CD or the like, magnetic and optical cards, an IC card, a memory card, or the like. The external storage device 340 includes a data storage area 341 and program storage area 342.

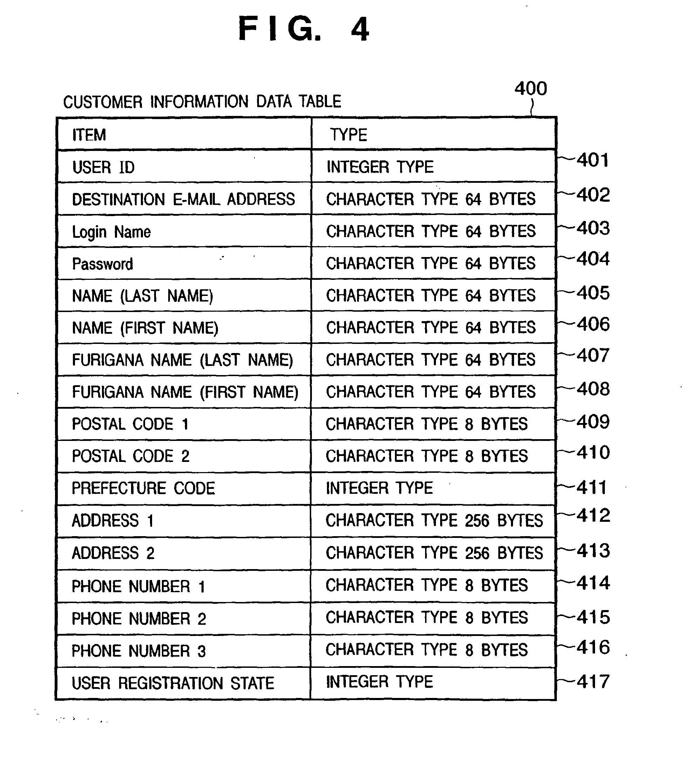

The data storage area 341 stores a customer information database 341a used to manage customer information user-registered in the photo site 105, an image information database 341b used to manage saved image information, a mobile terminal database 341c used to manage information for mobile terminals, and the like. Details of these databases are shown in Figs. 4 to 9 and Figs. 29 to 31.

The program storage area 320 stores programs which are to be loaded onto the program load area 332 of the RAM 300 upon execution (a program may be directly executed in, e.g., a memory card or the like). Although not shown in Fig. 3, the program storage area 320 also stores system programs such as an OS, Basic Input/Output System (BIOS), and the like used in this embodiment. In Fig. 3, a user registration module 321a, login module 321b, album browse module 321c, print order module 321d, and the like are stored as a program 321 for a PC access process modules. Furthermore, as a program 322 for a mobile terminal access process modules, an album browser module 322a as a characteristic feature of this embodiment is stored.

Note that the hardware arrangement that specifies the photo site 105 as a single apparatus has been exemplified. However, the servers shown in Fig. 2 may be present as independent apparatuses, and are connected via a LAN or the like to form the system arrangement. Also, the storage unit (especially, the external storage device 340) may be distributed to a plurality of devices.

### <Example of Configuration of Database>

Figs. 4 to 9 show the contents of the DB server 208 managed by the photo site 105 of this embodiment.

Fig. 4 shows a data table associated with customer information managed at the photo site 105 in this embodiment.

When the user executes user registration, a customer information data table 400 is generated for one record per user, and is registered in and managed by the DB server 208. A user ID is uniquely defined for each user, and customer information is managed by the customer information table 400 using a user ID 401 as a key. Information managed as customer information includes a destination mail address 402, login name 403, password 404, name (last name) 405, name (first name) 406, furigana name (last name) 407, furigana name (first name) 408, postal codes (1, 2) 409 and 410, prefecture code 411, addresses (1, 2) 412 and 413, phone numbers (1, 2, 3) 414, 415, and 416, and user registration state 417. The user registration state 417 indicates a user who has been registered and can receive services if it is "1", or a user whose registration has been deleted and cannot receive any services if it is "0".

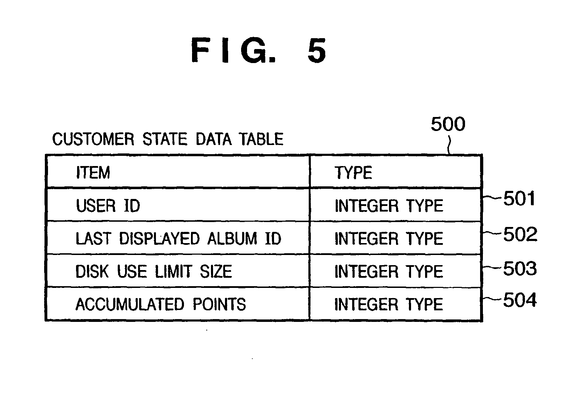

Fig. 5 shows a customer state table used to manage information that represents the current state of the user who has been registered in the photo site 105 in this embodiment.

When the user executes user registration, a customer state data table 500 is generated for one record per user, and is registered in and managed by the DB server 208. Setting values in this record are updated as needed in accordance with user's operations during access to the photo site. For this reason, when the user logs on the system, the customer state data table 500 stores the last used state of the user. This customer state data table 500 stores an album ID 502 of an album that the user displayed most recently, a disk use upper limit size 503, and points 504 accumulated upon placing print orders, using a user ID 501 as a key. Note that user ID 501 stores the same value as the user ID 401 in case of an identical user.

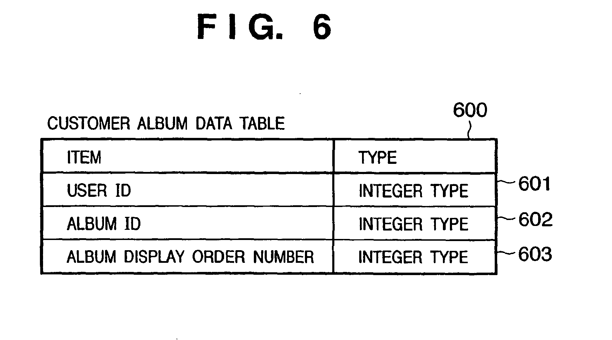

Fig. 6 shows a customer album data table managed by the photo site 105 in this embodiment.

When the user creates a new album, a customer album data table 600 is generated for one record accordingly, and is registered in and managed by the DB server 208. This record is deleted from the DB server 208 if the corresponding album is deleted by user's operation. The customer album data table 600 stores an ID 602 of an album of the user, and a display order number 603 of that album using a user ID 601 of the registered user as a key. Note that user ID 601 stores the same value as the user ID 401 in case of an identical user.

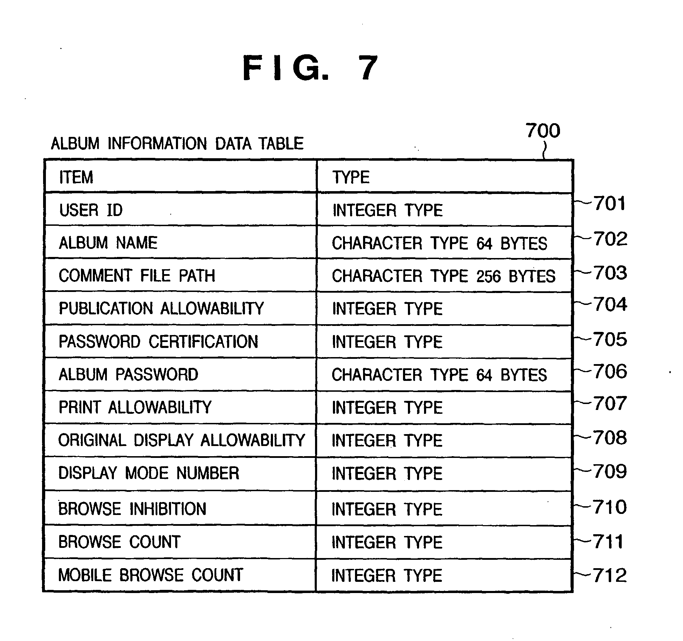

Fig. 7 shows an album information data table managed by the photo site 105 in this embodiment. When the user creates a new album at the photo site 105, an album information data table 700 is generated for one record accordingly, and is registered in and managed by the DB server 208. This record is deleted from the DB server 208 when the user deletes the corresponding album. The album information data table 700 manages an album name 702, a file path 703 to a comment to an album, an album publication allowability flag 704, a password certification flag 705, an album password 706, a print allowability flag 707, an original image display allowability flag 708, a display mode number 709, a browse inhibition flag 710, a browse count 711, and a mobile browse count 712 using an album ID 701 as a key.

If the album publication allowability flag 704 is "1", it indicates that publication is permitted; if it is "0", it indicates that publication is inhibited; and if it is "-1", it indicates that publication is inhibited by a site manager. If the password certification flag 705 is "1", it indicates that a password is set; if it is "0", it indicates that a password is not set. If the password certification flag 705 is "1", a password is saved in the album password 706. If the print allowability flag 707 is "1", it indicates that the album can be printed; if it is "0", it indicates that the album cannot be printed. If the original image display allowability flag 708 is "1", it indicates that display is permitted; if it is "0", it indicates that display is inhibited. If the display mode number is "1", it indicates a list display mode; if it is "0", it indicates a detailed display mode. Note that the album IDs 701 and 602 store the same ID in an identical album. If the album browse inhibition flag 710 is "1", it indicates that the mobile terminal can browse; if it is "0", it indicates that the mobile terminal cannot browse. This flag is controlled by a service manager. Also, the album browse count 711 from the PC 102 and the album browse count 712 from the mobile terminal are saved.

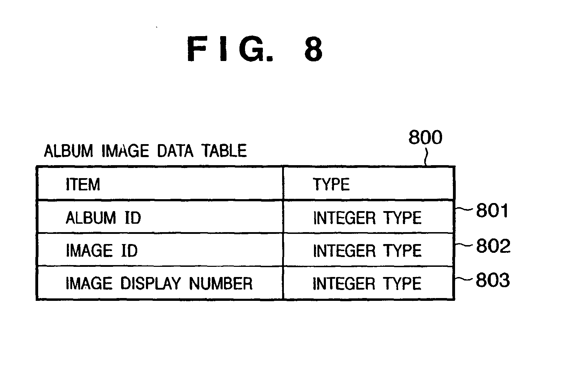

Fig. 8 shows an album image data table 800 managed by the photo site 105 in this embodiment.

When the user uploads an image onto an album, an album image data table 800 is generated for one record per image, and is registered in and managed by the DB server 208. This record is deleted from the DB server 208 when a corresponding image is deleted. The album image data table 800 manages an image ID 802 of an image stored in an album with an album ID 801, and an image display number 803 indicating the display position of that image in the album. Note that the album IDs 801 and 701 store the same ID in an identical album.

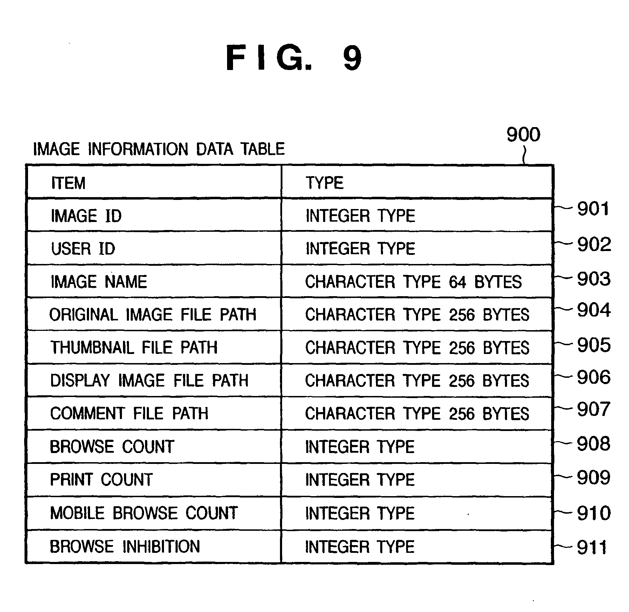

Fig. 9 shows an image information table 900 managed by the photo site 105 in this embodiment.

When the user uploads an image onto an album, an image information data table 900 is generated for one record per image, and is registered in and managed by the DB server 208. This record is deleted from the DB server 208 when a corresponding image is deleted. The image information table 900 saves a user ID 902 of the user who possesses that image, an image name 903, a file path 904 to an original image, a path 905 to a thumbnail file, a file path 906 to a preview image, a path 907 to a comment file to an image, an image browse count 908, an image print count 909, a mobile browse count 910, and a browse inhibition flag 911, using an image ID 901 as a key. Note that the image IDs 901 and 802 store the same ID for an identical image, and the user IDs 902 and 401 store the same ID for an identical user. The image browse count 910 from the mobile terminal is saved. If the browse inhibition flag 911 is "1", it indicates that the image can be browsed; if it is "0", it indicates that the image cannot be browsed.

### <Operation Example of Photo Site of This Embodiment>

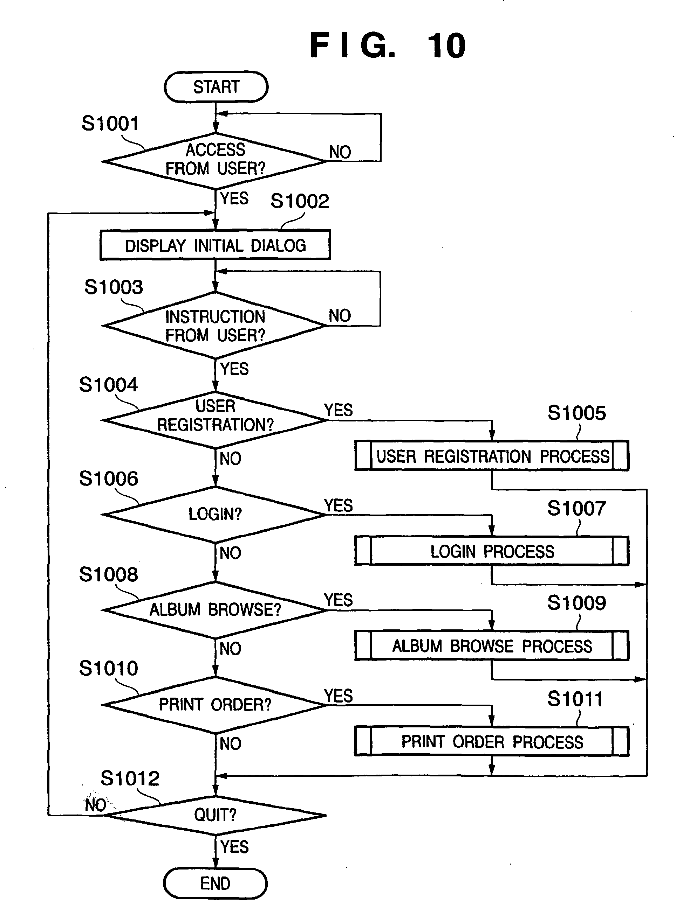

Fig. 10 shows an operation example of the overall photo site 105, and especially, an operation example in response to access from the PC.

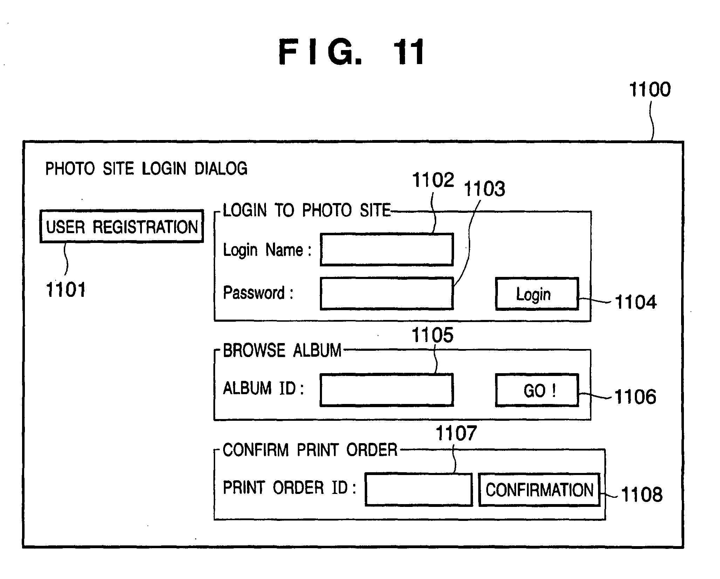

Upon detection of an access request from the PC 102 by user's operation in step S1001, an initial dialog (see Fig. 11) is displayed. If the user inputs an instruction in response to the initial dialog, it is checked in turn in steps S1004, S1006, S1008, and S1010 if "user registration", "login", "album browse", or "print order" has been selected. If "user registration" has been selected, a user registration process is executed in step S1005. If "login" has been selected, a login process is executed in step S1007. If "album browse" has been selected, an album browse process is executed in step S1009. If "print order" has been selected, a print order process is executed in step S1011.

Upon completion of respective processes, or if none of processes are selected, it is checked in step S1012 if the user quits site access. If NO in step S1012, the flow returns to step S1002 to display the initial dialog again. Upon reception of a quit instruction from the PC 102 by user's operation, the photo site 105 ends this process.

Detailed services of the application server 203 to the PC 102 will be explained below. In the following description, a case will be exemplified wherein the user PC 102A uploads images (saves images), and the user PC 102B or the mobile terminal 113A or 113B browses images.

### (Entrance to Photo Site 105).

Fig. 11 shows an example of an initial dialog displayed first when the user wants to receive services of the photo site 105 in this embodiment.

The storage unit of the photo site 105 stores HTML data used to display this dialog 1100, and that data is free to download via the Internet 104. Hence, when the user launches the Web browser and designates a URL indicating the address of the Web server of the photo site 105 on the user PC 102A, the dialog 1100 shown in Fig. 11 is displayed.

The dialog 1100 has a user registration button 1101, input fields 1102 and 1103 of a login name and password required when the registered user accesses the photo site 105, a login button 1104, an album ID input field 1105 required to browse an album, an album browse button 1106, and a print order ID input field 1107 and print order confirmation button 1108 used upon confirming print order status.

Processes executed upon depression of respective buttons on the dialog 1100 will be explained below.

### (Login)

A procedure required for the user who has registered in the photo site 105 to receive services at the photo site 105 will be explained below. In this embodiment, all user's images are managed by folders named albums.

When the user inputs his or her login name and password to the login name input field 1102 and password input field 1103, and presses the login button 1104 on the dialog 1100 in Fig. 11, the photo site 105 searches the DB server 208 for a corresponding record of the customer information data table 400. If the input login name cannot be found from the customer information data table 400, or if a password stored in the found record does not match a character string input to the password input field, an alert dialog is displayed.

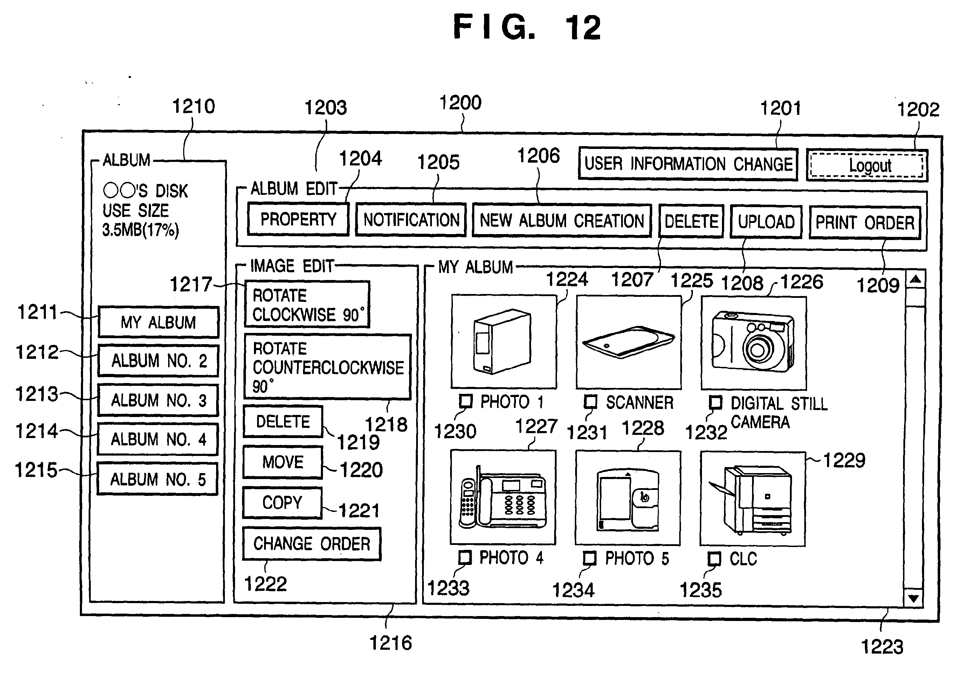

If the password stored in the found record matches the character string input to the input field 1103, it is determined that user authentication has succeeded, and a dialog 1200 shown in Fig. 12 (this dialog will be also referred to as a main menu hereinafter) is displayed.

On the dialog 1200, a button 1201 is used to change user information. A button 1202 is a logout button. On a field 1203, buttons used to edit an album displayed on this dialog are laid out. A button 1204 is used to set the property of an album. A button 1205 is an album notification button. A button 1206 is used to create a new album. A button 1207 is used to delete an album. A button 1208 is used to upload an image. A button 1209 is a print order button. On a field 1210, buttons used to select an album are displayed. At the head of this field, the total size of images that the user saves on the photo site 105, and the ratio of that total size to the allowable use size are displayed. Below such information, buttons corresponding in number to albums created by the user are laid out.

In Fig. 12, it is confirmed by buttons 1211 to 1215 that the user created five albums. Upon depression of each of these buttons, the photo site 105 updates images displayed on an album display field 1223 in accordance with the selected album, and displays the album name of that album at the upper left corner position of the album display field. On a field 1216, buttons used to edit images in the album are laid out. Upon depression of each of buttons 1217 to 1222, an edit process corresponding to the pressed button is done for images which are displayed within the field 1223 and have checked check boxes. The field 1223 is an album image display field. On this field, images stored in the album are displayed in turn, and check boxes are laid out in correspondence with the images. When the user presses each image, a property setup dialog of that image is displayed.

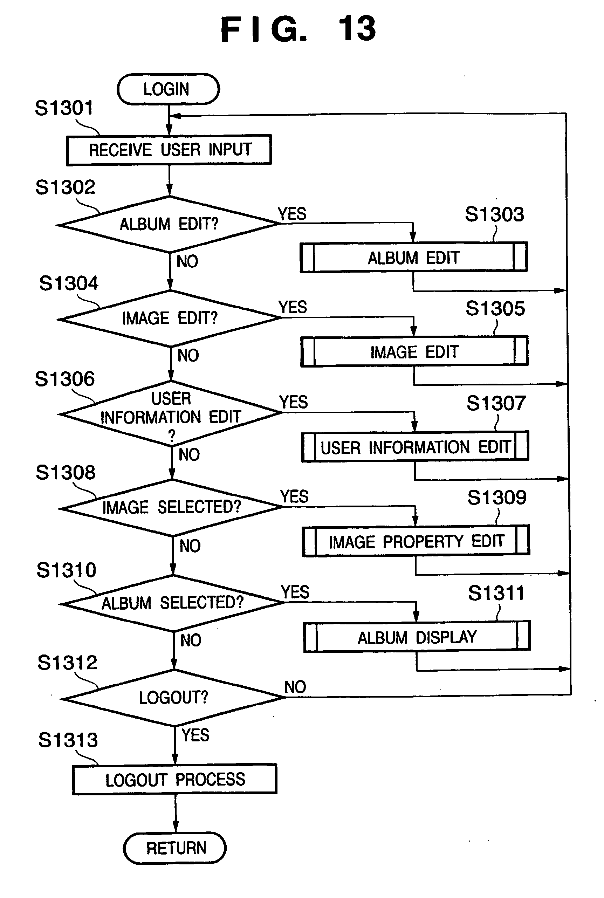

Fig. 13 is a flow chart showing a processing method associated with user's edit operation after the dialog 1200 in Fig. 12 is displayed. The following processes are done in accordance with user's operations on the dialog 1200.

In step S1301, a user input is accepted. It is checked in step S1302 if the user input is album edit. When the user has pressed one of the buttons in the field 1203, album edit is determined, and in such case, the flow advances to step S1303 to execute an album edit process.

If it is determined in step S1302 that the user input is not album edit, it is checked in step S1304 if the user input is image edit. When the user has pressed one of the buttons in the field 1216 on the dialog 1200, image edit is determined, and the flow advances to step S1305. In step S1305, a process such as clockwise/counterclockwise 90° rotation, delete, move, copy, order change, or the like is executed for the image selected from the album.

If it is determined in step S1304 that the user input is not image edit, the flow advances to step S1306 to check if the user input is edit of user information. When the user has pressed the button 1201 on the dialog 1200, edit of user information is determined. Upon depression of this button, a dedicated dialog is displayed, and the user can change the registered information. A user information edit process in this case is substantially the same as a user registration process that has been explained in the paragraphs of (user registration).

If it is determined in step S1306 that the user input is not edit of user information, the flow advances to step S1308 to see if the user input is image selection. When the user has selected an arbitrary image by, e.g., clicking a mouse button on that image within the field 1223 on the dialog 1200, it is determined that image selection has been made, and the flow advances to step S1309 to execute an image property edit process. In the image property edit process, the user can edit the image file name and comment.

If it is determined in step S1308 that the user input is not image selection, the flow advances to step S1310 to check if the user input is album selection. When the user has pressed one of buttons within the field 1210 on the dialog 1200, it is determined that album selection has been made, and an album display process is executed in step S1311.

If it is determined in step S1310 that the user input is not album selection, it is checked in step S1312 if the user input is logout. When the user has pressed the button 1202 on the dialog 1200, it is determined that the user input is logout, and the flow advances to step S1313 to execute a logout process. Upon execution of the logout process, the photo site 105 updates the last display album ID 502 in the user state data table 500 in the DB server 208 by registering the album ID of the currently displayed album. After that, the dialog 1100 is displayed again.

If it is determined in step S1312 that the user input is not logout, the flow returns to step S1301 to wait for the next user input.

Details of steps S1303 (album edit) and S1311 (album display) will be described below.

### [Album Edit Process]

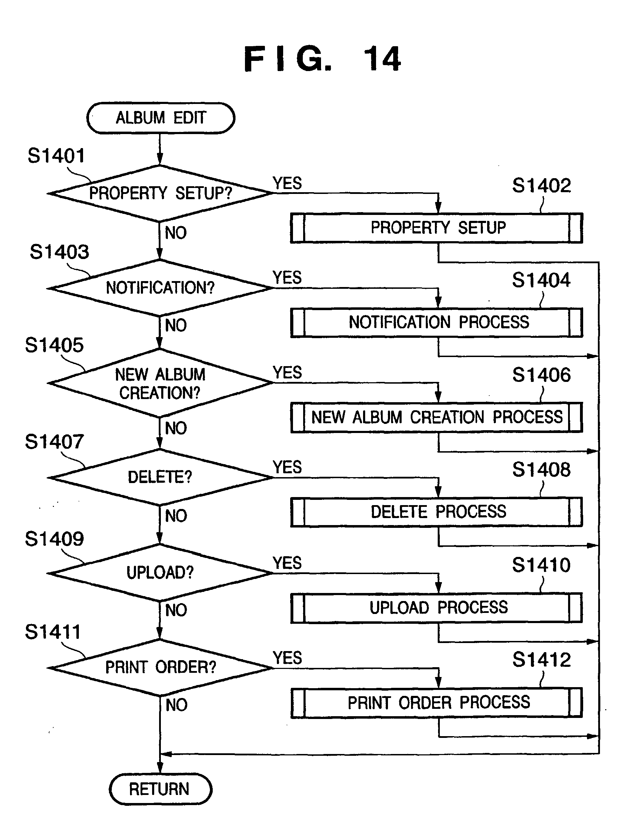

Fig. 14 is a flow chart showing the sequence of the album edit process at the photo site 105.

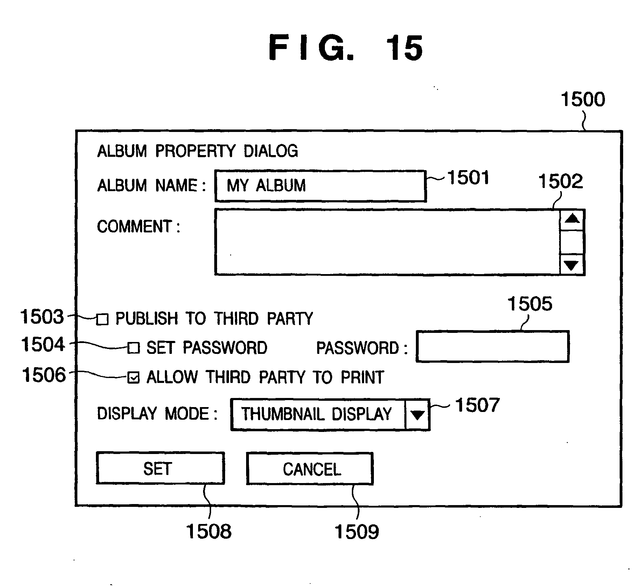

It is determined in step S1401 whether or not a property setup has been selected. When the user has pressed the button 1204 on the dialog 1200, it is determined that the property setup has been selected, and the flow advances to step S1402. In this case, a dialog 1500 shown in Fig. 15 is displayed, and various properties associated with the selected album (the album displayed so far on the field 1223 in Fig. 12) can be set.

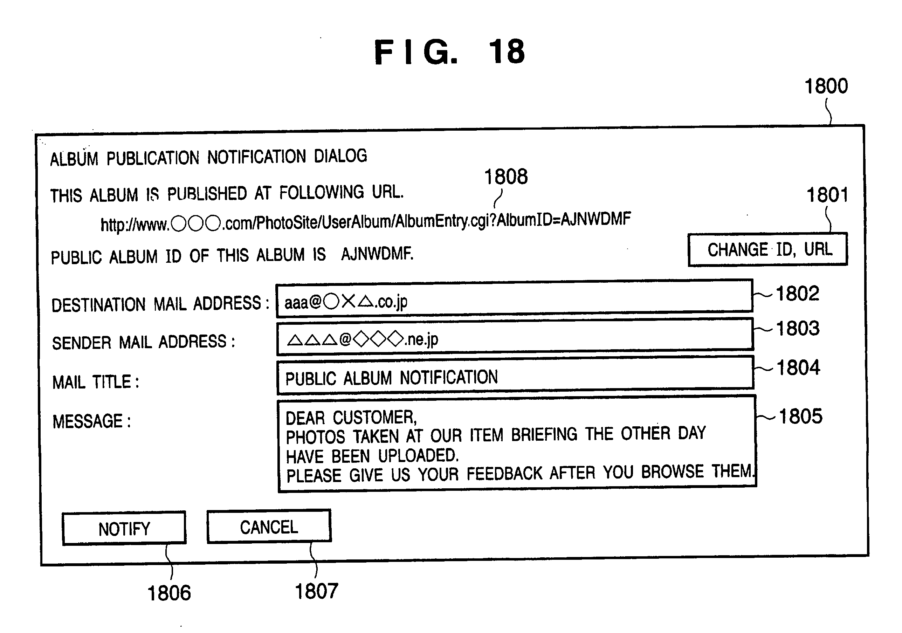

If it is determined in step S1401 that the property setup has not been selected, it is checked in step S1403 if album notification has been selected. When the user has pressed the button 1205 on the dialog 1200, it is determined that the album notification has been selected, and the flow advances to step S1404. In this case, a dialog 1800 shown in Fig. 18 is displayed, and a setup required to notify a third party of a browsing method of the selected album via e-mail can be made.

If it is determined in step S1403 that album notification has not been selected, it is checked in step S1405 if new album creation has been selected. When the user has pressed the button 1206 on the dialog 1200, it is determined that new album creation has been selected, and the flow advances to step S1406. In this case, the dialog 1500 shown in Fig. 15 is displayed. When the user inputs a new album name to an album name input field 1501 on the dialog 1500 and presses a set button 1508, a new album is created.

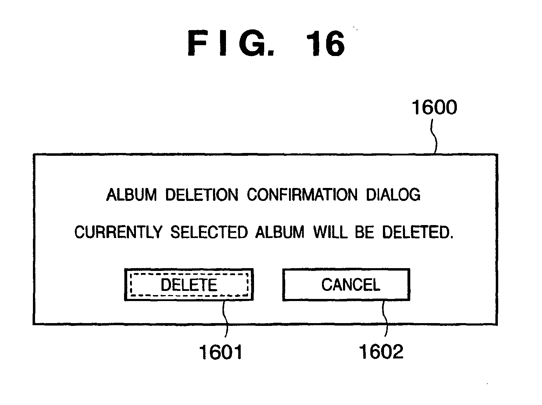

If it is determined in step S1405 that new album creation has not been selected, it is determined in step S1407 whether or not album deletion has been selected. When the user has pressed the button 1207 on the dialog 1200, it is determined that album deletion has been selected, and the flow advances to step S1408. Upon depression of the button 1207, a dialog 1600 shown in Fig. 16 is displayed, and the user can delete the selected album.

If it is determined in step S1407 that album deletion has not been selected, it is checked in step S1409 if image upload to the selected album has been selected. When the user has pressed the button 1208 on the dialog 1200, it is determined that image upload has been selected, and the flow advances to step S1410 to execute an upload process.

If it is determined in step S1409 that image upload has not been selected, it is checked in step S1411 if album print order has been selected. When the user has pressed the button 1209 on the dialog 1200, it is determined that album print order has been selected, and the flow advances to step S1412 to execute a print order process.

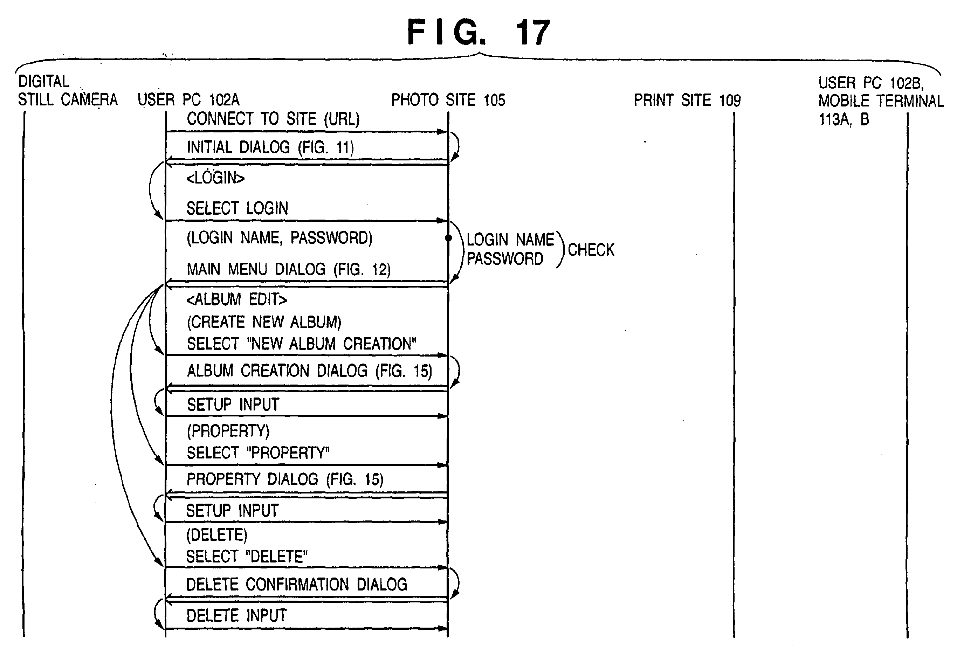

Note that Fig. 17 shows an example of a protocol between the user PC 102A and photo site 105 in the new album creation process, property setup process, image file delete process, and image file upload process in accordance with the sequence shown in Fig. 14.

When the user creates an album at the photo site 105 and uploads an image file, the photo site 105 creates one record in the image information data table 900 in Fig. 9 in the DB server 208. Then, the photo site 105 sets an identifier that uniquely identifies the image in the image ID 901, a file path to the image file in the original image file path 904, a file path to a newly created thumbnail image of the image file in the thumbnail file path 905, and a file path to a preview image in the preview image file path 906. Also, the photo site 105 sets "0" in the browse count 908 and print count 909 as an initial value. Also, for the image file contained in the album, the photo site 105 generates one record in the album image data table 800, and sets an album ID in the album ID 801, an identifier that uniquely identifies the image in the image ID 802, and a display order in the album in the image display number 803.

### (Example of Album Browse Notification)

Fig. 18 shows a dialog displayed upon depression of the notification button 1205 on the dialog 1200.

After the user inputs a destination mail address 1802, sender mail address 1803, mail title 1804, and message 1805 on a dialog 1800, if he or she presses a notification button 1806, the photo site 105 merges the above contents with a typical mail document prepared at the photo site 105, and sends an album notification mail message to the destination mail address 1802.

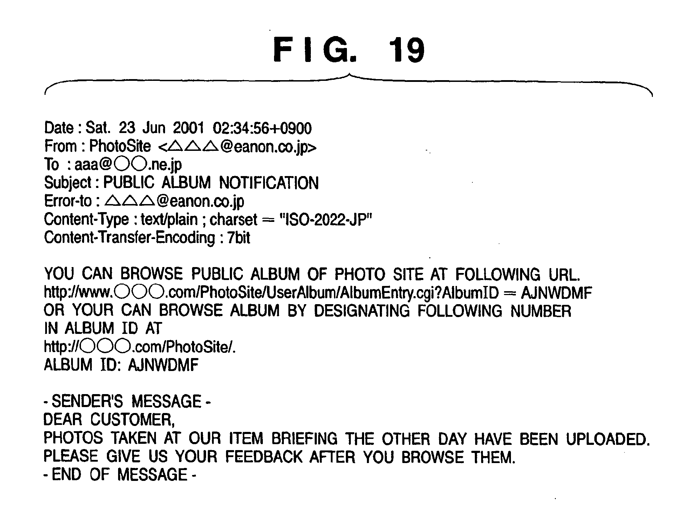

Fig. 19 shows an example of the album notification mail message. The URL and album ID contained in this notification mail message have the same contents displayed on a URL & public album ID display field 1808 on the dialog 1800. Upon reception of the mail message, the user can browse an album by designating the URL described in that mail. Also, the user can browse the same album as that which can be browsed upon designating the URL when he or she inputs the album ID described in the mail message to the album ID designation field 1105 on the dialog 1100 and presses a GO! button 1106. The album ID value included in a parameter described in the URL is the same as the album ID of a public album.

Note that the public album ID is generated by encrypting the album ID managed in the photo site 105. In this way, the public album ID makes a third party harder to imagine the original album ID 701 from its number or character string, and to analogize the public album IDs of other albums.

### [Album Display Process]

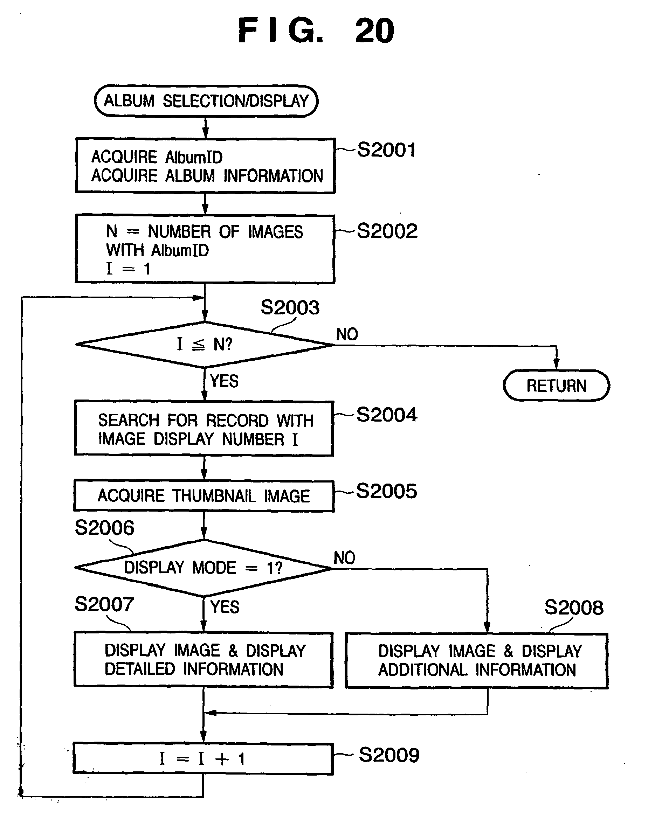

Fig. 20 is a flow chart showing the process association with selection and display of an album upon depression of one of the album select buttons 1211 to 1215 displayed within the album select field 1210 on the dialog 1200.

The number of the pressed button from the head one is examined in step S2001, and the customer album data table 600 in the DB server 208 is searched for a record which has that number as the album display order number 603, thus acquiring the album ID 601 of that record as an album ID. Also, a record of the album information data table 700 is specified based on that album ID 601 to extract album information.

In step S2002, the album image data table 800 in the DB server 208 is searched for all records each having the album ID obtained in step S2001 as the album ID 801. The number of hit records as a result of search is set in N, and "1" is substituted in image count work variable I.

It is checked in step S2003 if I ≤ N. While I ≤ N, processes in steps S2004 to S2009 are repeated to display all images in the album.

In step S2004, the records of the album image data table 800, which are retrieved in step S2002, are searched for a record, which has I as the image display number 803, so as to obtain the image ID 802 of that image. After the image ID 802 is obtained, the image information data table 900 in the DB server 208 is searched for a record which has that image ID 802 as the image ID 901. In step S2005, a path to a thumbnail file of the image is acquired from the record retrieved in step S2004.

It is checked in step S2006 based on the album information data table 700 acquired in step S2001 if the value of the display mode number 709 is "1". In this embodiment, if this value is "0", it indicates thumbnail display; if it is "1", it indicates detailed display.

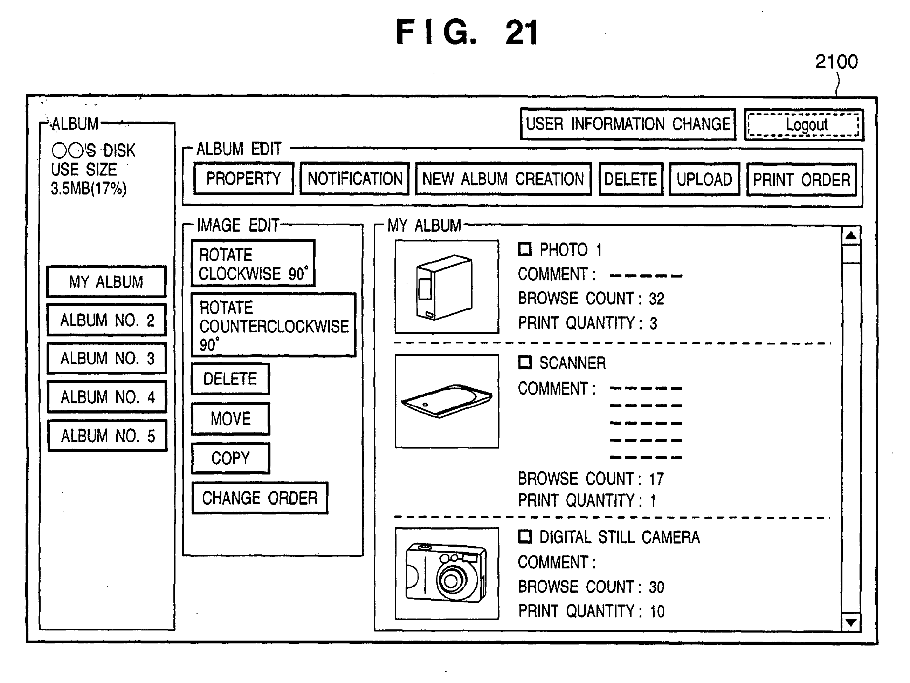

If it is determined in step S2006 that the display mode is "1", a thumbnail image and detailed information of the image are displayed in step S2007. In this embodiment, an image name, comment, browse count, and print count extracted from the image information data table 900 are displayed as the detailed information, and an image edit check box is displayed together. A dialog 2100 shown in Fig. 21 shows an example of album display in the detailed display mode. Since this dialog 2100 is substantially the same as the dialog 1200 except for the display method of the image display field 1223, a detailed description thereof will be omitted.

If it is determined in step S2006 that the display mode is not "1", a thumbnail image, image name, and image edit check box are displayed in step S2008. The dialog 1200 shown in Fig. 12 is also an example in such simplified display mode.

If I > N in step S2003, since all images in the album are displayed, the process ends.

In this embodiment, only two display modes are explained. However, three or more display modes may be prepared.

### <Example of Album Browse Process>

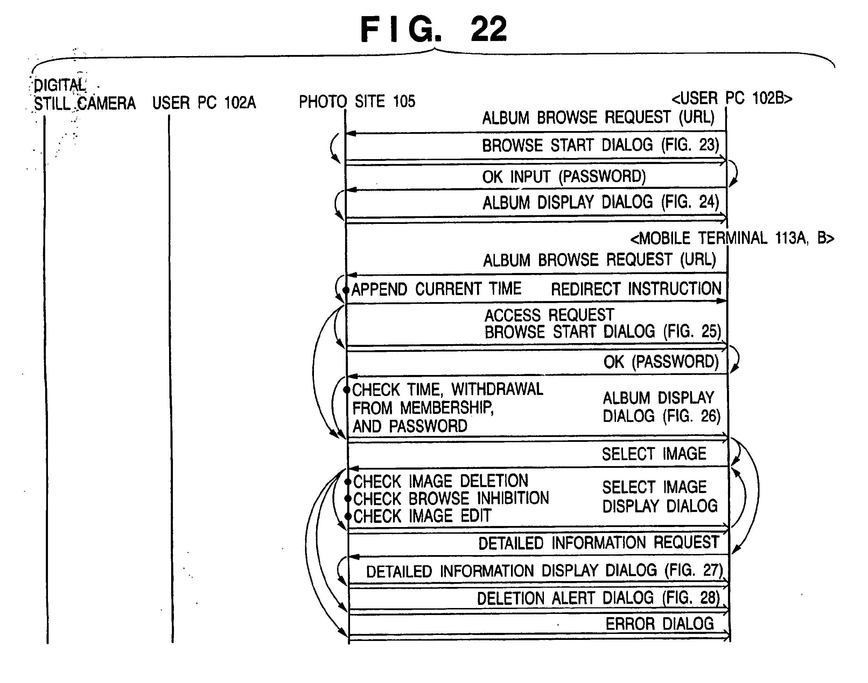

Fig. 22 shows an example of a protocol between the user PC 102B or mobile terminal 113A or 113B, and the photo site 105 when an album saved at the photo site 105 is browsed from the user PC 102B or mobile terminal 113A or 113B.

### (Album Browse From User PC)

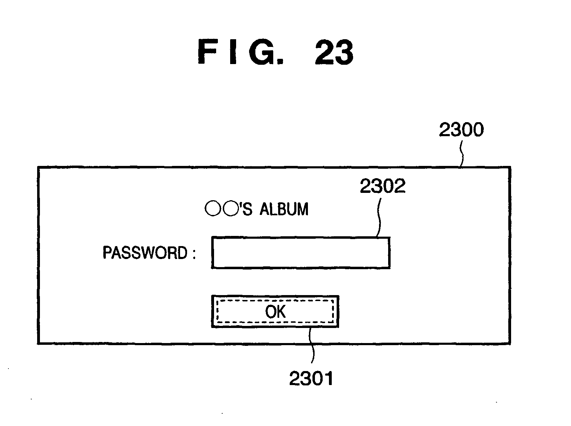

The user who received the notification mail shown in Fig. 19 can display an album browse start dialog 2300 shown in Fig. 23. Note that this dialog is also displayed when the user inputs the album ID described in the notification mail in the album ID input field 1105 on the dialog 1100 and presses the GO! button 1106.

When the photo site 105 finds a corresponding album by analyzing the album ID in a parameter part of the input URL or the album ID input to the album ID input field 1105, it displays the name (last name) 405 on the dialog 2300 shown in Fig. 23. When it is determined based on the password certification flag 705 in the retrieved record of the album information data table 700 that the album is set with a password, a password input field 2302 is displayed. Note that no password input field 2302 is displayed for an album without any password.

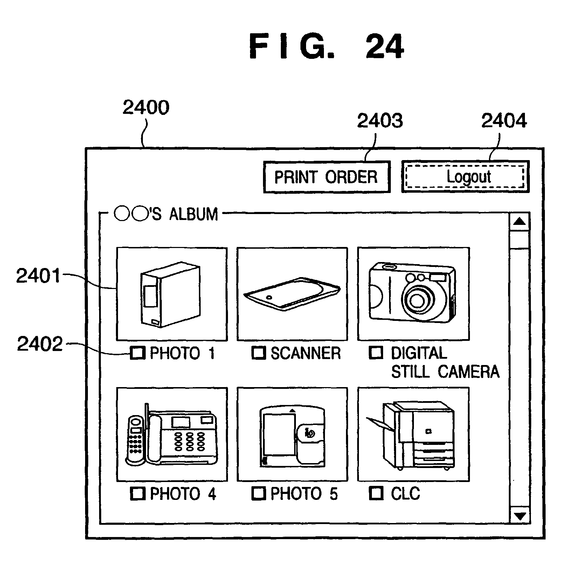

Upon depression of an OK button 2301, a dialog 2400 shown in Fig. 24 is displayed for the album without any password or the album whose password is correctly input. The contents of the dialog 2400 are the same as those of the album display field 1223 on the dialog 1200. If a wrong password is input, an error dialog is displayed.

The value of the print allowability flag 707 is acquired from the album information data table 700, and if that value indicates that the album is printable, a button 2403 is displayed, and the user can place a print order. In this case, the flow of the print order process is substantially the same as that of the login user process (the process executed upon depression of the button 1209 on the dialog 1200 in Fig. 12), except that no points are added at the photo site 105.

### (Album Browse From Mobile Terminal)

The mobile terminal application server 204 will be described in detail below.

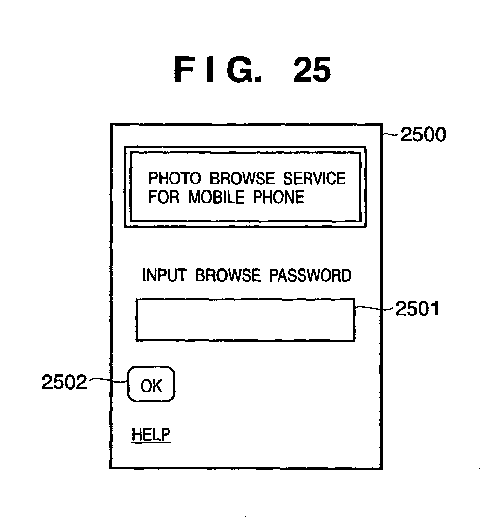

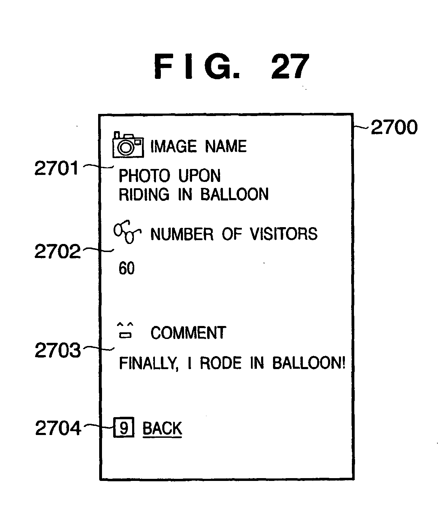

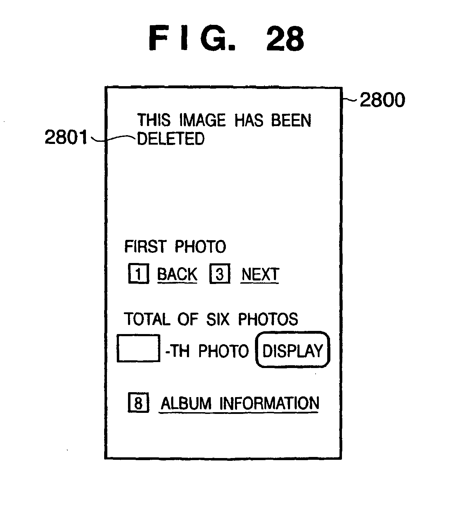

Figs. 25 to 28 show display examples of dialogs to be displayed on the display of the mobile terminal 113. This display layout changes depending on text wrap states due to different screen sizes of mobile terminal models, image sizes to be displayed, and the like.

When the mobile terminal user who received the notification mail shown in Fig. 19 designates the URL described in mail text, an album browse start dialog 2500 shown in Fig. 25 can be displayed.

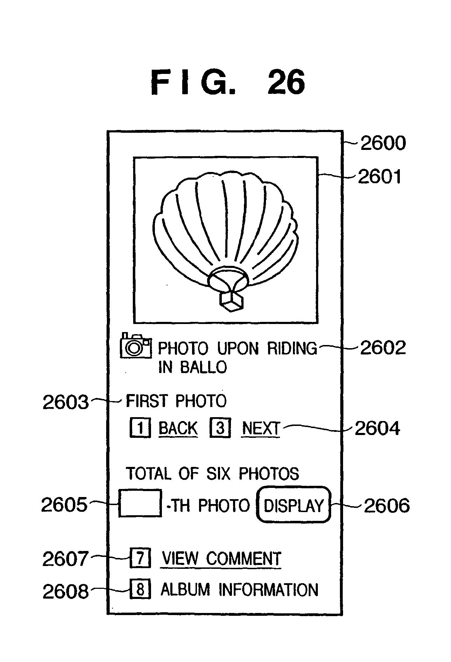

Upon reception of an access request to the URL described in mail text from the mobile terminal 113, the application server 204 temporarily appends the current time in the system to a URL parameter, and then issues a redirect instruction to the mobile terminal 113. Upon reception of this instruction, the mobile terminal 113 issues an access request to the application server 204 again. In response to this request, the application server 204 analyzes the album ID in a URL parameter part. If the server 204 determines by a processing flow to be described later that an album corresponding to the album ID can be browsed, it further checks if a password is set for that album. If the password is set, the server 204 displays the album browse start dialog 2500; otherwise, it displays a dialog 2600 shown in Fig. 26.

When the mobile terminal user inputs a password to an input field 2501 of the album browse start dialog 2500, and presses an OK button 2502, the application server 204 displays the dialog 2600 only when it determines that the correct password is input. On the other hand, if a time-out is reached or if a wrong password is input, the server 204 displays an error dialog.

The dialog 2600 displays a thumbnail image 2601 with a reduced image size and its name 2602, an image order 2603 in the album, links 2604 used to select an image to be displayed, the total number of images in the album, an input field 2605 used to designate an image to be displayed using the image order and an input determination button 2606, a link 2607 used to display an image information display dialog 2700, and a link 2608 used to display an album information display dialog.

When the mobile terminal user presses one of the links 2604, an image before or after the currently displayed image is displayed on a display field of the image 2601, and the corresponding image name is displayed on a display field of the name 2602. When the mobile terminal user inputs an image order in the input field 2606 and presses the "display" button, an image of that image order is displayed on the display field of the image 2601, and the corresponding image name is displayed on the display field of the name 2602.

When the mobile terminal user presses the link 2607, the image information display dialog 2700 used to display detailed information such as an image name, comment, the number of viewers of the image, and the like is displayed. When the mobile terminal user presses the link 2608, the album information display dialog (not shown) used to display detailed information such as an album name, comment, the number of viewers of the album, and the like is displayed.

The application server 204 checks the state in the album at the depression timing of the links 2604 or "display" button 2606. When the next image to be displayed has already been deleted from the album, the server 204 displays a dialog 2800.

On the other hand, if a browse inhibition flag is set for the image, an error dialog is displayed.

The dialog 2700 displays a detailed image name 2701, the number 2702 of viewers of the image, a comment 2703, and a link 2704 used to go back to the dialog 2600.

The album information display dialog (not shown) has similar display contents to those on the dialog 2700, but displays the album name in place of the image name, the number of viewers of the album in place of the number of viewers of the image, and the album comment in place of the image comment.

The dialog 2800 displays a comment 2801 "this image has been deleted" in place of the image 2601 and image name 2602 of the dialog 2600. Also, the dialog 2800 does not display any link used to display the image information display dialog 2700. Since other display contents are the same as those in Fig. 26, a description thereof will be omitted.

### <Configuration of Database for Mobile Application>

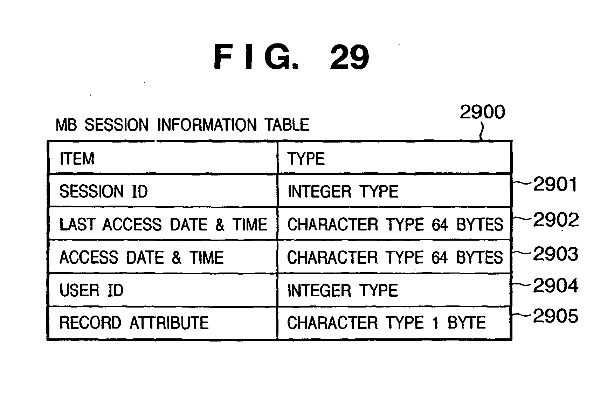

Figs. 29 to 31 show the contents of tables which are managed by the mobile terminal application server 204 in the DB server 208. The application server 204 generates these tables in response to access from the mobile terminal 113, and uses them to control display contents and services to the mobile terminal 113.

Fig. 29 shows a table used to manage access from a specific mobile terminal 113.

This MB session information table 2900 is registered for one record per new access in the DB server 208. In this case, a uniquely defined session ID is assigned as identification information of a mobile terminal user who made access, and is stored in the table together with the user ID (= user ID 501) of an album owner who submitted the browse notification mail.

The MB session information table 2900 stores a date & time at the time of new access, and a last access date & time using the identical session ID. The application server 204 periodically searches the MB session information table 2900 in the DB server 208, and sets a flag in the record property of a record for which a predetermined period of time has elapsed from the last access date & time. Upon receiving access from the mobile terminal 113, if the flag is set in the record property of the record with the notified session ID, it is determined that a communication time-out is reached, and that access is denied.

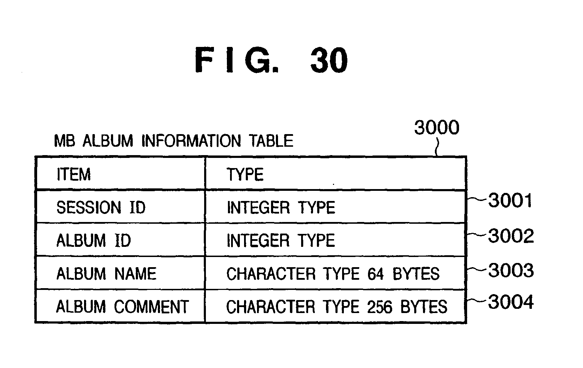

Fig. 30 shows a table used to store information of an album designated upon receiving an album browse request from the mobile terminal 113.

This MB album information table 3000 is recorded for one recorded per new access in the DB server 208. In this case, the session ID stored in the MB session information table 2900, the album ID designated from the mobile terminal 113, and the album name, album comment, and the like in a record corresponding to the album ID of the album information data table 700 are copied and stored in this table.

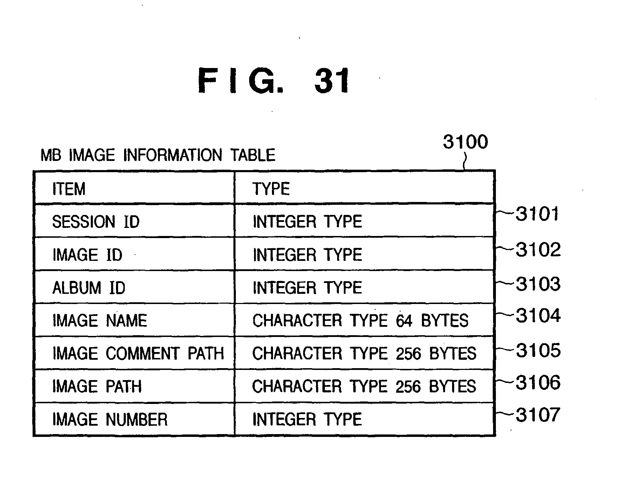

Fig. 31 shows a table used to store image information in an album designated upon receiving an album browse request from the mobile terminal 113.

In response to each new access, records corresponding in number to images contained in an album are registered in an MB image information table 3100 in the DB server 208. In the MB image information table 3100, the session ID stored in the MB session information table 2900, and information in the corresponding records of the album image data table 800 and image information data table 900 are copied and stored.

Furthermore, the application server 204 temporarily acquires thumbnail image data stored in an area of the file server 209, which is designated by the thumbnail file path 905 in the image information data table 900. The application server 204 copies and stores that thumbnail image data in a temporary area in the file server 209, which is exclusively used for access from the mobile terminal 113. Also, the server 204 stores a file path to the copied thumbnail image data in an image path 3106 in the MB image information table 3100.

### <Browse Control Flow Chart>

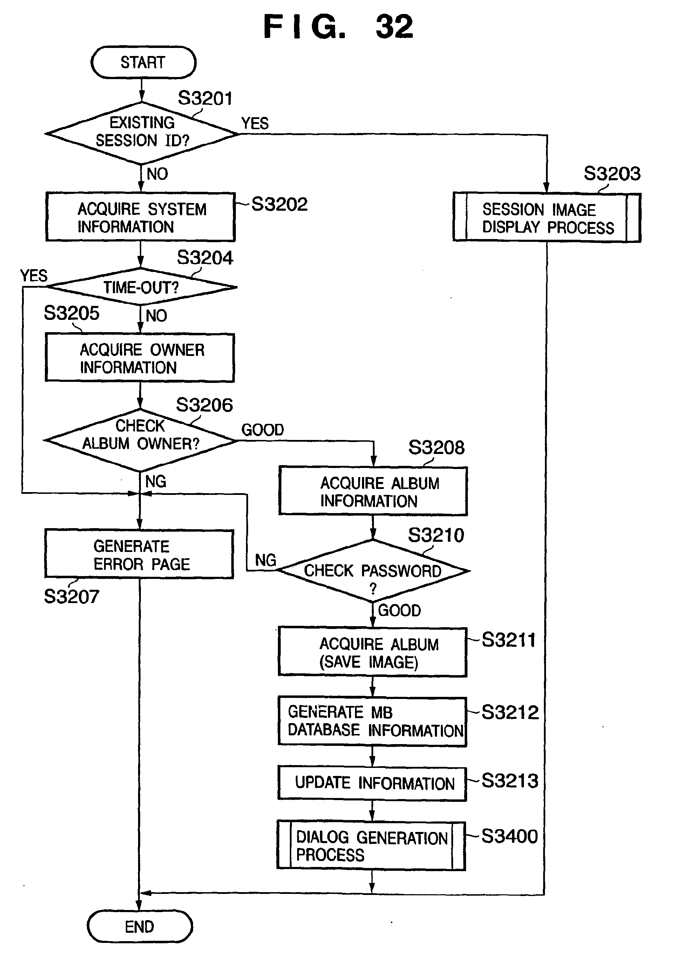

Fig. 32 is a flow chart showing the processing sequence when the application server 204 displays the dialog 2600.

Upon receiving an album browse request from the mobile terminal 113 by mobile terminal user's operation, the application server 204 detects a session ID from a URL parameter part contained in the album browse request in step S3201, and searches the MB session information table 2900 to see if that session ID already exists. If it is determined that the session ID already exists, the server 204 determines the second or subsequent access using the identical session ID, and executes a session image display process in step S3203. On the other hand, if the detected session ID does not hit, the server 204 determines the first image browse display process, and acquires the standard time in the photo site 105 by acquiring system information in step S3202.

In step S3204, the server 204 compares time information appended to the URL parameter part with the time acquired in step S3202. If a given time period has elapsed from that time information after access, the server 204 determines a time-out, and displays an error page in step S3207. In this way, access using a URL previously bookmarked at the mobile terminal 113 can be defined.

If no time-out is detected, the server 204 analyzes an album ID appended to the URL parameter part in step S3205. The server 204 searches the customer album data table 600 and customer information data table 400 using this album ID as a key to acquire corresponding records. The server 204 determines in step S3206 based on the search result whether or not the album owner is registered as an authentic user of the photo site 105. If the album owner is not registered, the server 204 generates an error page in step S3207.

If the album owner is registered, the server 204 retrieves a corresponding record of the album information data table 700 based on the album ID acquired from the URL parameter part in step S3208, and checks the information and password in the URL parameter and confirms the album publication allowability flag and album browse allowability flag in step S3210. If an error has occurred, the server 204 generates an error page in step S3207.

If no error occurs, the server 204 retrieves corresponding records of the album image data table 800 and image information data table 900 as information that pertains to images contained in the album on the basis of the information in the retrieved record of the album information data table 700 in step S3211. In this case, the server 204 temporarily acquires thumbnail image data stored in an area of the file server 209 designated by the thumbnail image file path 905, and copies it to a temporary area (in the file server 209) exclusively used for access from the mobile terminal 113.

In step S3212, the server 204 generates records in the MB session information table 2900, MB album information table 3000, and MB image information table 3100, and stores information and image path information acquired from the respective tables in these records. Note that the server 204 assigns a session ID as management information of the user who made access, and stores it together with the user ID (= user ID 501) of an album owner who submitted the browse notification mail.

In step S3213, the server 204 reflects an access count from the mobile terminal 113 to the contents of the mobile browse count fields in the album information data table 700 and image information data table 900. In step S3400, the server 204 generates data of the dialog 2600.

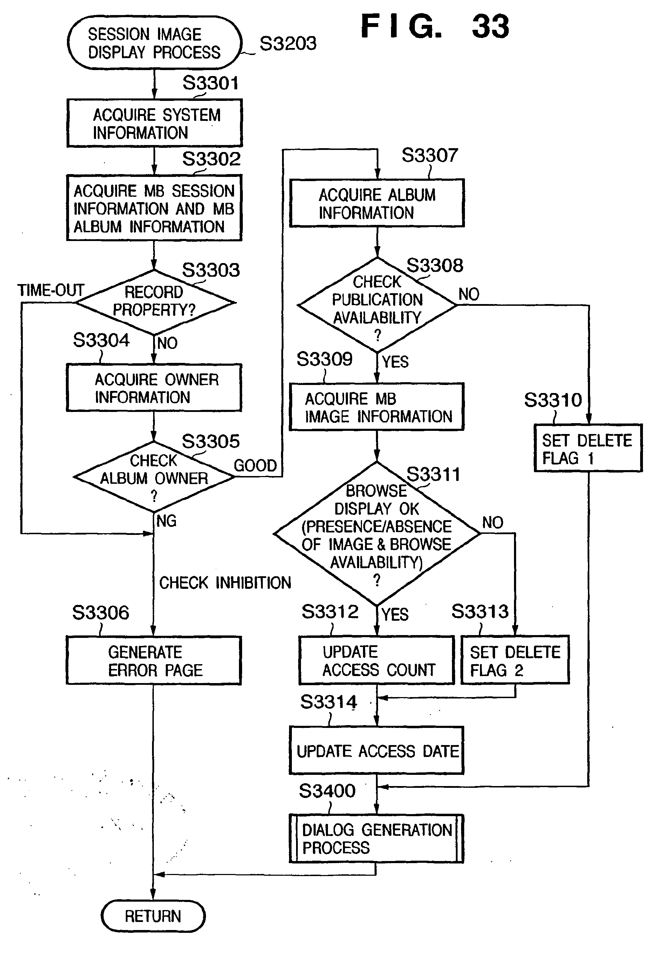

Fig. 33 is a flow chart showing details of a process (S3203) executed when the MB session information table 2900 has already been generated.

In step S3301, the server 204 acquires the standard time in the photo site 105 by acquiring system information. In step S3302, the server 204 analyzes a session ID appended to a URL parameter part. The server 204 searches the MB session information table 2900 and MB album information table 3000 using this session ID as a key to acquire corresponding records. The URL parameter part contains the album ID and user ID.

In step S3303, the record property in the record of the MB session information table 2900 is checked. If the flag is set, since the previous access was made the given period of time before, a communication time-out is determined, and the server 204 displays an error page in step S3306. In this manner, access using a URL previously bookmarked at the mobile terminal 113 can be defined. Furthermore, the customer information data table 400 is searched for a corresponding record using this user ID as a key in step S3304, and it is confirmed in step S3305 whether or not the album owner is registered as an authentic user of the photo site 105. If the album owner is not registered, the server 204 generates an error page in step S3306.

If the album owner is registered, the server 204 retrieves a corresponding record of the album information data table 700 based on the album ID acquired from the URL parameter part in step S3307, and confirms the album publication allowability flag in step S3308. If the album can be published, records of the MB image information table 3100 are retrieved in step S3309. On the other hand, if the album cannot be published, delete flag 1 is set, and the flow advances to step S3315 to execute a dialog generation process.

Whether or not an image is present in the image information data table 900 and its browse allowability flag are confirmed in step S3311. If the image is present and can be browsed, the mobile browse count is updated in step S3312. On the other hand, if no such image is present, it is determined that the image has been deleted, and delete flag 2 is set in step S3313.

In step S3314, the access date is reflected in the last login date in the MB session information table 2900. The flow then advances to step S3400 to execute a dialog generation process.

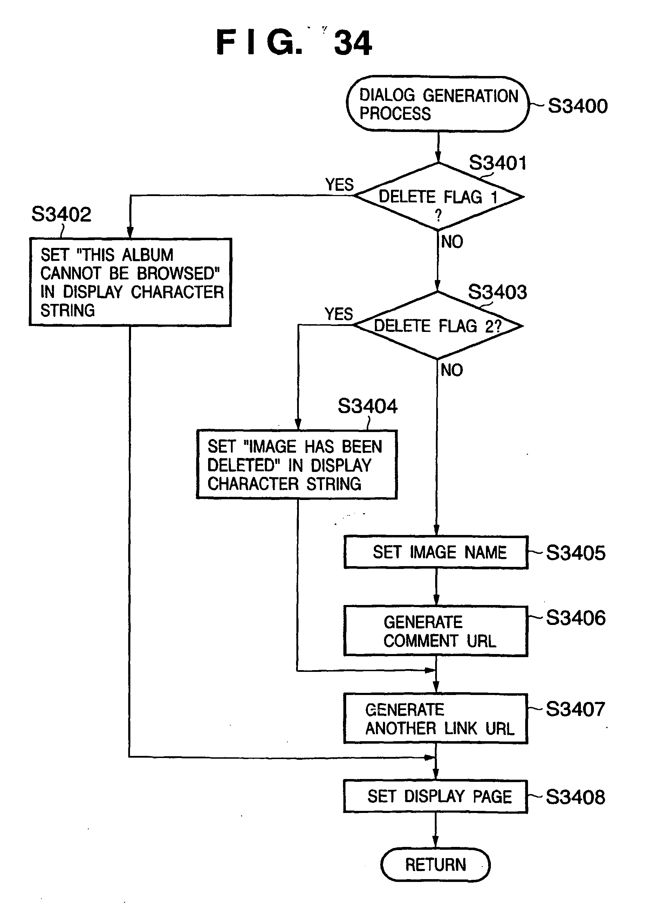

Fig. 34 is a flow chart showing details of the process (S3400) for generating data required to display the dialog 2600.

It is examined in step S3401 if delete flag 1 is set. If delete flag 1 is set, an error display character string "this album cannot be browsed" is set in step S3402.

It is examined in step S3403 if delete flag 2 is set. If delete flag 2 is set, an error display character string "image has been deleted" is set in step S3404.

If neither delete flag 1 nor flag 2 are set, the image name stored in the MB image information table 3100 is set in step S3405.

In step S3406, link information of the dialog 2600 is generated in a format including session information. Furthermore, the URL of an image, another link information, parameters associated with a form, and the like of the dialog 2600 are generated in a format including session information in step S3407. In step S3408, the generated dialog information is sent to the mobile terminal 113 together.

If delete flag 2 is set, display data that displays a dialog like the dialog 2800 is generated.

On the other hand, if delete flag 1 is set, display data that displays a dialog which advises that an image is not published is generated.

### (Another Embodiment)

In this embodiment, an image network service using a digital still camera has been exemplified. However, the present invention can be applied to any other services that deliver images and their information. Furthermore, as described above, the present invention is not limited to an image browse system, and provides a technique that can be widely applied to mobile phone services connected to an external apparatus such as a server or the like via a communication line. The scope of the present invention includes such modifications.

The present invention also includes a storage medium (or recording medium), which records a program code of a software program that can implement the functions of the above-mentioned embodiments to the system or apparatus, and reading out and executing the program code stored in the storage medium by a computer (or a CPU or MPU) of the system or apparatus. Tn this case, the program code itself read out from the storage medium implements the functions of the above-mentioned embodiments, and the storage medium which stores the program code are an aspect of the present invention. The functions ot the above-mentioned embodiments may be implemented not only by executing the readout program code by the computer but also by some or all of actual processing operations executed by an operating system, (OS) running on the computer on the basis of an instruction of the program code.

Furthermore, the functions of the abode-mentioned embodiments may be implemented by some or all of actual processing operations executed by a CPU or the like arranged in a function extension card or a function extension unit, which is inserted in or connected to the computer, after the program code read out from the storage medium is written in a memory of the extension card or unit.

When the present invention is applied to the storage medium, that storage medium stores the program codes corresponding to the aforementioned flow charts.

As described above, according to the present invention, an information processing system, information processing apparatus, and information processing method, which manage image data and character data to be output upon providing an image browse service, and which immediately reflect necessary information on a browse image while acquiring information about browse inhibition, deletion of an image, withdrawal from membership of the user, and the like from original data upon outputting that browse image, a storage medium which stores a program that implements the above method to be readable by an information processing apparatus, and that program, can be provided.

Since image data and character data to be output upon providing an image browse service are managed, and information about browse inhibition, deletion of an image, withdrawal from membership of the user, and the like can be acquired from original data upon outputting a browse image, the problem of lack of immediate reflection of necessary information on data can be solved.

Since copied data are referred to and processed, processes need not be done based on huge original data, and the processing time can be reduced.

As many apparently widely different embodiments of the present invention can be made without departing from the scope thereof, it is to be understood that the invention is not limited to the specific embodiments thereof except as defined in the appended claims.

## Claims

1. An information providing apparatus (105) for providing stored contents data to a communication terminal (113), the apparatus comprising:
storage means (340) for storing contents data and contents data management information (400, 500, 600, 700, 800, 900) used to manage the contents data; and
copy means (310) for generating copy information by copying (S3211) the stored contents data in response to a request received from a communication terminal (113); and
contents data providing means (310) for employing the generated copy information to provide to the communication terminal (113) contents data requested in the contents data request (S3408);
session management means (310) for managing a session for the communication terminal, the session management means being operable, when a new access request is received from the communication terminal, to detect whether the access request is a first access request of the session or a second or subsequent access request of the session (S3201) and, when the session management means detects that the access request is such a first access request, to cause the copy means to generate said copy information in association with the session (S3212) for use by the contents data providing means to provide to the communication terminal (113) contents data requested during the course of the session;
edit means (310) for editing the contents data management information in response to an access request from an owner of the contents data, such editing being permissible during the course of said session;
determining means (310) for determining the contents data management information in response to a contents data request from the communication terminal (113), the determining means being operable, when the session management means detects that the access request is such a second or subsequent access request, to check (S3305, S3308, S3311) the contents data management information stored in said storage means to determine if the copy information associated with the session is still usable by the contents data providing means to provide to the communication terminal (113) contents data requested in the second or subsequent access request concerned; and
control means (310) for providing message information (S3402, S3404, S3408) instead of the requested contents data to the communication terminal (113) when the result of the determination by the determination means is that the copy information associated with the session is not still usable.

2. Apparatus according to claim 1, wherein said determining means is adapted, on the basis of the contents data management information stored in said storage means, to check the presence/absence of the contents data and browse availability of the contents data, and to check owner information to determine the presence/absence of the registration of an owner as an owner of the contents data.

3. Apparatus according to claim 1 or 2, wherein the copy means are also adapted to generate the copy information associated with the session by copying (S3212) parts of the contents data management information (700, 800, 900) in addition to copying the stored contents data.

4. Apparatus according to any one of the preceding claims, wherein the storage means are adapted to store image data as contents data.

5. A method of providing stored contents data from an information providing apparatus (105) to a communication terminal (113), the information providing apparatus having storage means storing such contents data and contents data management information (400, 500, 600, 700, 800, 900) used to manage the contents data, and the method comprising the steps of:
managing a session for the communication terminal, the managing including, when a new request for accessing contents data is received from the communication terminal, detecting whether the access request is a first access request of the session or a second or subsequent access request of the session (S3201) and, when it is detected that the access request is such a first access request, copying the stored contents data to generate copy information in association with the session (S3212) for use to provide to the communication terminal (113) contents data requested during the course of the session;
editing the contents data management information in response to an access request from an owner of the contents data, such editing being permissible during the course of said session;
determining the contents data management information in response to a contents data request from the communication terminal (113), the determining including, when it is detected that the access request is such a second or subsequent access request, checking (S3305, S3308, S3311) the contents data management information stored in said storage means to determine if the copy information associated with the session is still usable to provide to the communication terminal (113) contents data requested in the second or subsequent access request concerned; and
providing the requested contents data to the communication terminal (113) by employing the copy information associated with the session when it is determined in the determining step that the copy information associated with the session is still usable, and providing message information (S3402, S3404, S3408) instead of the requested contents data to the communication terminal (113) when it is determined in the determining step that the copy information associated with the session is not still usable.

6. A method according to claim 5, wherein said determining step employs the contents data management information stored in said storage means to check the presence/absence of the contents data and browse availability of the contents data, and to check owner information to determine the presence/absence of the registration of an owner as an owner of the contents data.

7. A method according to claim 5 or 6, wherein the copy information associated with the session is generated by also copying (S3212) parts of the contents data management information (700, 800, 900) in addition to copying the stored contents data.

8. A method according to one of claims 5 to 7, wherein the contents data stored in said storage means includes image data.

9. A storage medium storing processor implementable instructions for controlling an electronic processor to carry out all of the steps of any one of the method claims 5 to 8.

## Patentansprüche

1. Informationsliefervorrichtung (105) zum Liefern gespeicherter Inhaltsdaten an ein Kommunikationsterminal (113), umfassend:
eine Speichereinrichtung (340) zum Speichern von Inhaltsdaten und Inhaltsdatenverwaltungsinformation (400, 500, 600, 700, 800, 900), die zum Verwalten der Inhaltsdaten verwendet wird; und
eine Kopiereinrichtung (310) zum Generieren von Kopieinformation durch Kopieren (S3211) der gespeicherten Inhaltsdaten ansprechend auf eine von einem Kommunikationsterminal (113) empfangene Anforderung; und
eine Inhaltsdatenliefereinrichtung (310) zum Verwenden der generierten Kopieinformation, um an das Kommunikationsterminal (113) Inhaltsdaten zu liefern, die in der Inhaltsdatenanforderung (S3408) angefordert wurden;
eine Sitzungsverwaltungseinrichtung (310) zum Verwalten einer Sitzung (session) für das Kommunikationsterminal, wobei die Sitzungsverwaltungseinrichtung dann, wenn eine neue Zugriffsanforderung vom Kommunikationsterminal empfangen wird, betreibbar ist zum Erkennen, ob die Zugriffsanforderung eine erste Zugriffsanforderung der Sitzung oder eine zweite oder nachfolgende Zugriffsanforderung der Sitzung (S3201) ist, und, wenn die Sitzungsverwaltungseinrichtung erkennt, dass die Zugriffsanforderung eine solche erste Zugriffsanforderung ist, die Kopiereinrichtung veranlasst, die Kopieinformation in Verbindung mit der Sitzung (S3212) zwecks Verwendung durch die Inhaltsdatenliefereinrichtung zu generieren, um an das Kommunikationsterminal (113) Inhaltsdaten zu liefern, die im Verlauf der Sitzung angefordert werden;
eine Editiereinrichtung (310) zum Editieren der Inhaltsdatenverwaltungsinformation ansprechend auf eine Zugriffsanforderung von einem Besitzer der Inhaltsdaten, wobei ein solches Editieren im Verlauf der Sitzung zulässig ist;
eine Bestimmungseinrichtung (310) zum Bestimmen der Inhaltsdatenverwaltungsinformation ansprechend auf eine Inhaltsdatenanforderung vom Kommunikationsterminal (113), wobei die Bestimmungseinrichtung dann, wenn die Sitzungsverwaltungseinrichtung erkennt, dass die Zugriffsanforderung eine erwähnte zweite oder nachfolgende Zugriffsanforderung ist, betreibbar ist zum Prüfen (S3305, S3308, S3311) der in der Speichereinrichtung gespeicherten Inhaltsdatenverwaltungsinformation, um zu bestimmen, ob die Kopieinformation in Verbindung mit der Sitzung noch von der Inhaltsdatenliefereinrichtung verwendbar ist zum Liefern von Inhaltsdaten an das Kommunikationsterminal (113), die in der zweiten oder nachfolgenden betreffenden Zugriffsanforderung angefordert wurden; und
eine Steuereinrichtung (310) zum Liefern von Nachrichteninformation (S3402, S3404, S3408) anstelle der angeforderten Inhaltsdaten an das Kommunikationsterminal (113), wenn das Ergebnis der Bestimmung durch die Bestimmungseinrichtung lautet, dass die Kopieinformation in Verbindung mit der Sitzung nicht mehr verwendbar ist.

2. Vorrichtung nach Anspruch 1, wobei die Bestimmungseinrichtung dazu ausgebildet ist, auf der Grundlage der in der Speichereinrichtung gespeicherten Inhaltsdatenverwaltungsinformation das Vorhandensein/Fehlen von Inhaltsdaten zu prüfen und eine Durchsicht (browse) bezüglich der Verfügbarkeit der Inhaltsdaten vorzunehmen, und Besitzerinformation zu prüfen, um das Vorhandensein/Fehlen der Registrierung eines Besitzers als Besitzer der Inhaltsdaten zu bestimmen.

3. Vorrichtung nach Anspruch 1 oder 2, wobei die Kopiereinrichtung außerdem dazu ausgebildet ist, die Kopieinformation in Verbindung mit der Sitzung **dadurch** zu generieren, dass zusätzlich zum Kopieren der gespeicherten Inhaltsdaten Teile der Inhaltsdatenverwaltungsinformation (700, 800, 900) kopiert (S3212) werden.

4. Vorrichtung nach einem der vorhergehenden Ansprüche, wobei die Speichereinrichtung dazu ausgebildet ist, Bilddaten als Inhaltsdaten zu speichern.

5. Verfahren zum Liefern gespeicherter Inhaltsdaten aus einer Informationsliefervorrichtung (105) an ein Kommunikationsterminal (113), wobei die Informationsliefervorrichtung eine Speichereinrichtung besitzt, die solche Inhaltsdaten und Inhaltsdatenverwaltungsinformation (400, 500, 600, 700, 800, 900), die zum Verwalten der Inhaltsdaten verwendet wird, speichert, umfassend folgende Schritte:
Verwalten einer Sitzung (session) für das Kommunikationsterminal, wobei die Verwaltung dann, wenn eine neue Anforderung zum Zugreifen auf Inhaltsdaten vom Kommunikationsterminal empfangen wird, beinhaltet: Erkennen, ob die Zugriffsanforderung eine erste Zugriffsanforderung der Sitzung oder eine zweite oder nachfolgende Zugriffsanforderung der Sitzung ist (S3201), und, wenn erkannt wird, dass die Zugriffsanforderung eine solche erste Zugriffsanforderung ist, Kopieren der gespeicherten Inhaltsdaten zum Generieren von Kopieinformation in Verbindung mit der Sitzung (S3212) zur Verwendung beim Liefern von Inhaltsdaten an das Kommunikationsterminal (113), die im Verlauf der Sitzung angefordert werden;
Editieren der Inhaltsdatenverwaltungsinformation ansprechend auf eine Zugriffsanforderung von einem Besitzer der Inhaltsdaten, wobei ein solches Editieren im Verlauf der Sitzung zulässig ist;
Bestimmen der Inhaltsdatenverwaltungsinformation ansprechend auf eine Inhaltsdatenanforderung vom Kommunikationsterminal (113), wobei das Bestimmen dann, wenn erkannt wird, dass die Zugriffsanforderung eine erwähnte zweite oder nachfolgende Zugriffsanforderung ist, beinhaltet: Prüfen (S3305, S3308, S3311) der in der Speichereinrichtung gespeicherten Inhaltsdatenverwaltungsinformation, um zu bestimmen, ob die Kopieinformation in Verbindung mit der Sitzung noch verwendbar ist, um an das Kommunikationsterminal (113) Inhaltsdaten zu liefern, die in der zweiten oder nachfolgenden betreffenden Zugriffsanforderung angefordert wurden; und
Liefern der angeforderten Inhaltsdaten an das Kommunikationsterminal (113) durch Verwenden der Kopieinformation in Verbindung mit der Sitzung, wenn im Bestimmungsschritt bestimmt wird, dass die Kopieinformation in Verbindung mit der Sitzung noch verwendbar ist, und Liefern von Nachrichteninformation (S3402, S3404, S3408) anstelle der angeforderten Inhaltsdaten an das Kommunikationsterminal (113) dann, wenn im Bestimmungsschritt bestimmt wird, dass die Kopieinformation in Verbindung mit der Sitzung nicht mehr verwendbar ist.

6. Verfahren nach Anspruch 5, wobei der Bestimmungsschritt die in der Speichereinrichtung gespeicherte Inhaltsdatenverwaltungsinformation dazu benutzt, das Vorhandensein/Fehlen der Inhaltsdaten zu prüfen und eine Durchsicht (browse) bezüglich der Verfügbarkeit der Inhaltsdaten vorzunehmen, und um Besitzerinformation zu prüfen, um das Vorhandensein/Fehlen der Registrierung eines Besitzers als Besitzer der Inhaltsdaten zu bestimmen.

7. Verfahren nach Anspruch 5 oder 6, wobei die Kopieinformation in Verbindung mit der Sitzung generiert wird, indem zusätzlich zum Kopieren der gespeicherten Inhaltsdaten auch Teile der Inhaltsdatenverwaltungsinformation (700, 800, 900) kopiert (S3212) werden.

8. Verfahren nach einem der Ansprüche 5 bis 7, wobei die in der Speichereinrichtung gespeicherten Inhaltsdaten Bilddaten enthalten.

9. Speichermedium, das prozessorimplementierbare Befehle speichert, um einen elektronischen Prozessor derart zu steuern, dass sämtliche Schritte eines der Verfahren nach den Ansprüchen 5 bis 8 ausgeführt werden.

## Revendications

1. Dispositif (105) de fourniture d'information destiné à fournir, à un terminal (113) de communication, des données de contenu mémorisées, le dispositif comprenant :
un moyen (340) de mémorisation destiné à mémoriser des données de contenu et de l'information (400, 500, 600, 700, 800, 900) de gestion de données de contenu utilisé pour gérer les données de contenu ; et
un moyen (310) de copie destiné à engendrer de l'information de copie en copiant (S3211) les données de contenu mémorisées en réponse à une demande reçue d'un terminal (113) de communication ; et
un moyen (310) de fourniture de données de contenu destiné à employer l'information de copie engendrée pour fournir au terminal (113) de communication des données de contenu demandées dans la demande (S3408) de données de contenu ;
un moyen (310) de gestion de session destiné à gérer une session pour le terminal de communication, le moyen de gestion de session étant utilisable, lorsqu'une nouvelle demande d'accès est reçue du terminal de communication, pour détecter si la demande d'accès est une première demande d'accès de la session ou une deuxième, ou ultérieure, demande d'accès de la session (S3201) et, lorsque le moyen de gestion de session détecte que la demande d'accès est une telle première demande d'accès, pour faire que le moyen de copie engendre ladite information de copie en association avec la session (S3212) pour utilisation par le moyen de fourniture de données de contenu pour fournir au terminal (113) de communication des données de contenu demandées au cours de la session ;
un moyen (310) de mise en forme destiné à mettre en forme l'information de gestion de données de contenu en réponse à une demande d'accès provenant d'un propriétaire des données de contenu, une telle mise en forme pouvant être autorisée au cours de ladite session ;
un moyen (310) de détermination destiné à déterminer l'information de gestion de données de contenu en réponse à une demande de données de contenu provenant du terminal (113) de communication, le moyen de détermination étant utilisable, lorsque le moyen de gestion de session détecte que la demande d'accès est une telle deuxième, ou ultérieure, demande d'accès, pour vérifier (S3305, S3308, S3311) l'information de gestion de données de contenu mémorisée dans ledit moyen de mémorisation pour déterminer si l'information de copie associée à la session est encore utilisable par le moyen de fourniture de données de contenu pour fournir au terminal (113) de communication des données de contenu demandées dans la deuxième, ou ultérieure, demande d'accès concernée ; et
un moyen (310) de commande destiné à fournir, au terminal (113) de communication, de l'information (S3402, S3404, S3408) de message à la place des données de contenu demandées lorsque le résultat de la détermination par le moyen de détermination est que l'information de copie associée à la session n'est plus utilisable.

2. Dispositif selon la revendication 1, dans lequel ledit moyen de détermination est apte, sur la base de l'information de gestion de données de contenu mémorisée dans ledit moyen de mémorisation, à vérifier la présence/l'absence des données de contenu et rechercher la disponibilité des données de contenu, et à vérifier l'information de propriétaire pour déterminer la présence/l'absence de l'enregistrement d'un propriétaire en tant que propriétaire des données de contenu.

3. Dispositif selon la revendication 1 ou 2, dans lequel le moyen de copie est également apte à engendrer l'information de copie associée à la session en copiant (S3212) des morceaux de l'information (700, 800, 900) de gestion de données de contenu en plus de copier les données de contenu mémorisées.

4. Dispositif selon l'une quelconque des revendications précédentes, dans lequel le moyen de mémorisation est apte à mémoriser, comme données de contenu, des données d'image.

5. Procédé de fourniture de données de contenu mémorisées d'un dispositif (105) de fourniture d'information à un terminal (113) de communication, le dispositif de fourniture d'information comportant un moyen de mémorisation mémorisant de telles données de contenu et de l'information (400, 500, 600, 700, 800, 900) de gestion de données de contenu utilisée pour gérer les données de contenu ; et le procédé comprenant les étapes consistant :
à gérer une session pour le terminal de communication, la gestion incluant, lorsqu'une nouvelle demande d'accès est reçue du terminal de communication, le fait de détecter si la demande d'accès est une première demande d'accès de la session ou une deuxième, ou ultérieure, demande d'accès de la session (S3201) et, lorsqu'il est détecté que la demande d'accès est une telle première demande d'accès, le fait de copier les données de contenu mémorisées pour engendrer de l'information de copie en association avec la session (S3212) pour utilisation pour fournir au terminal (113) de communication des données de contenu demandées au cours de la session ;
à mettre en forme l'information de gestion de données de contenu en réponse à une demande d'accès provenant d'un propriétaire des données de contenu, une telle mise en forme pouvant être autorisée au cours de ladite session ;
à déterminer l'information de gestion de données de contenu en réponse à une demande de données de contenu provenant du terminal (113) de communication, la détermination incluant, lorsqu'il est détecté que la demande d'accès est une telle deuxième, ou ultérieure, demande d'accès, le fait de vérifier (S3305, S3308, S3311) l'information de gestion de données de contenu mémorisée dans ledit moyen de mémorisation pour déterminer si l'information de copie associée à la session est encore utilisable pour fournir au terminal (113) de communication des données de contenu demandées dans la deuxième, ou ultérieure, demande d'accès concernée ; et
à fournir, au terminal (113) de communication, les données de contenu demandé en employant l'information de copie associée à la session lorsqu'il est déterminé à l'étape de détermination que l'information de copie associée à la session est encore utilisable, et à fournir, au terminal (113) de communication, de l'information (S3402, S3404, S3408) de message à la place des données de contenu demandées lorsqu'il est déterminé à l'étape de détermination que l'information de copie associée à la session n'est plus utilisable.

6. Procédé selon la revendication 5, dans lequel ladite étape de détermination emploie l'information de gestion de données de contenu mémorisée dans ledit moyen de mémorisation pour vérifier la présence/l'absence des données de contenu et rechercher la disponibilité des données de contenu, et pour vérifier l'information de propriétaire pour déterminer la présence/l'absence de l'enregistrement d'un propriétaire en tant que propriétaire des données de contenu.

7. Procédé selon la revendication 5 ou 6, dans lequel l'information de copie associée à la session est engendrée en copiant aussi (S3212) des morceaux de l'information (700, 800, 900) de gestion de données de contenu en plus de copier les données de contenu mémorisées.

8. Procédé selon l'une des revendications 5 à 7, dans lequel les données de contenu mémorisées dans ledit moyen de mémorisation incluent des données d'image.

9. Support de mémorisation mémorisant des instructions pouvant être mises en oeuvre par processeur pour commander un processeur électronique pour effectuer toutes les étapes de l'une quelconque des revendications 5 à 8 de procédé.
